# EUROPEAN PATENT APPLICATION

(11) **EP 4 564 904 A1**
(43) Date of publication of application: **04.06.2025**
(21) Application number: 23849323.3
(22) Date of filing: 31.07.2023
(51) Int. Cl.: H04W 28/24

(54) **COMMUNICATION METHOD, COMMUNICATION APPARATUS, AND COMMUNICATION SYSTEM**

(30) Priority: 04.08.2022 CN 202210934488
(71) Applicant: Huawei Technologies Co., Ltd., Shenzhen, Guangdong 518129 (CN)
(72) Inventor: XU, Ruixiong, Shenzhen, Guangdong 518129 (CN); PENG, Wenjie, Shenzhen, Guangdong 518129 (CN); PAN, Xiaodan, Shenzhen, Guangdong 518129 (CN)
(74) Representative: Isarpatent
(86) International application number: PCT/CN2023/110091
(87) International publication number: WO 2024/027615

(57) **Abstract**

This application provides a communication method, a communication apparatus, and a communication system, so that when a second device provides a relay service for communication between a first device and a third device, the second device establishes a radio bearer of a first link based on configuration information that is of the first link and that is sent by the first device, and data subsequently transmitted on the radio bearer can meet a quality of service (quality of service, QoS) requirement corresponding to QoS information of the first link, to improve user experience. In the method, the first device obtains the QoS information of the first link, where the first link is a link between the first device and the second device, and the second device provides the relay service for the communication between the first device and the third device; and the first device sends the configuration information of the first link to the second device based on the QoS information of the first link, where the configuration information of the first link is for establishing, on the first link, the radio bearer that meets the QoS information.

## Description

This application claims priority to Chinese Patent Application No. 202210934488.X, filed with the China National Intellectual Property Administration on August 4, 2022 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of wireless technologies, and in particular, to a communication method, a communication apparatus, and a communication system.

### BACKGROUND

In a wireless communication system, data communication may be performed between different terminal devices via a network device. In addition, different terminal devices may directly communicate with each other without using the network device. This communication manner may be referred to as sidelink (sidelink, SL) communication.

Currently, in a sidelink communication process, before a terminal device (which may be denoted as a source device) transmits a data service to another terminal device (which may be denoted as a destination device), a radio bearer may be established between the source device and the destination device based on a quality of service (quality of service, QoS) requirement corresponding to QoS information of the data service between the source device and the destination device, so that data subsequently transmitted on the established radio bearer meets the QoS requirement, to improve user experience.

In addition, forwarding between different terminal devices may need to be performed via another relay device, to improve coverage or a capacity of a sidelink. In other words, data can be received by the destination device only after being separately transmitted on a radio bearer between the source device and the relay device and a radio bearer between the relay device and the destination device.

However, in a scenario in which the communication is implemented based on the relay device, how to meet a QoS requirement of service data is an urgent technical problem to be resolved.

### SUMMARY

This application provides a communication method, a communication apparatus, and a communication system, so that when a second device provides a relay service for communication between a first device and a third device, the second device establishes a radio bearer of a first link based on configuration information that is of the first link and that is sent by the first device, and data subsequently transmitted on the radio bearer can meet a QoS requirement corresponding to QoS information of the first link, to improve user experience.

A first aspect of this application provides a communication method. The method is performed by a first device, the method is performed by some components (such as a processor, a chip, or a chip system) in the first device, or the method may be implemented by a logical module or software that can implement all or some functions of the first device. In the first aspect and the possible implementations of the first aspect, an example in which the communication method is performed by the first device is used for description. In the method, the first device obtains quality of service QoS information of a first link, where the first link is a link between the first device and a second device, and the second device provides a relay service for communication between the first device and a third device. The first device sends configuration information of the first link to the second device based on the QoS information of the first link, where the configuration information of the first link is for establishing, on the first link, a radio bearer that meets the QoS information.

Based on the foregoing technical solution, after the first device determines, based on the QoS information of the first link, the configuration information of the first link for establishing, on the first link, the radio bearer that meets the QoS information, the first device sends the configuration information of the first link to the second device, so that the first device and the second device can communicate with each other based on the configuration information of the first link. In other words, when the second device provides the relay service for the communication between the first device and the third device, the second device establishes the radio bearer of the first link based on the configuration information that is of the first link and that is sent by the first device, so that data subsequently transmitted on the radio bearer can meet a QoS requirement corresponding to the QoS information of the first link, to improve user experience.

Optionally, the first device may determine the configuration information of the first link based on the QoS information of the first link in a plurality of manners. For example, the first device locally determines the configuration information of the first link based on the QoS information of the first link. For another example, the first device sends the QoS information of the first link to a network device, so that the network device determines the configuration information of the first link based on the QoS information of the first link and sends the configuration information of the first link to the first device. Alternatively, another implementation is used. This is not limited herein.

It may be understood that the second device may provide the relay service for a plurality of communication processes between the first device and the third device.

Optionally, the plurality of communication processes may include a unidirectional data communication process. For example, the communication process may be a process in which the first device sends data to the third device. In the communication process, the first device is used as a source device of the data, and the third device is used as a destination device of the data. For another example, the communication process may be a process in which the third device sends data to the first device. In the communication process, the third device is used as a source device of the data, and the first device is used as a destination device of the data.

Optionally, the plurality of communication processes may include a bidirectional data communication process. For example, the communication process may be a process in which the first device sends data to the third device and the third device sends data to the first device. In the communication process, the first device can be used as both a source device and a destination device of the data. Correspondingly, in the communication process, the third device can be used as both the source device and the destination device of the data.

Optionally, the QoS information of the first link includes QoS information of one or more QoS flows transmitted on the first link. QoS information of each QoS flow may be referred to as a QoS parameter (parameter) or a QoS profile (profile) of the QoS flow. Similarly, QoS information of a second link mentioned below includes QoS information of one or more QoS flows transmitted on the second link. QoS information of each QoS flow may be referred to as a QoS parameter (parameter) or a QoS profile (profile) of the QoS flow. The QoS information includes at least one of the following: a maximum flow bit rate, a guaranteed flow bit rate, a packet delay budget, a maximum packet loss rate, a packet error rate, a PC5 interface 5G quality of service identifier (PC5 5G QoS Identifier, PC5 5QI), a priority, a communication range, an averaging window (averaging window), and a maximum data burst volume (maximum data burst volume).

Optionally, the first link may be a unicast connection link (or a multicast connection link, a broadcast connection link, or a PC5 unicast link) between the first device and the second device. Similarly, the second link mentioned below may be a unicast connection link (or a multicast connection link, a broadcast connection link, or a PC5 unicast link) between the second device and the third device.

In a possible implementation, the QoS information of the first link is determined by the first device. Alternatively, the method further includes: The first device receives the QoS information of the first link from the network device.

Based on the foregoing technical solution, when the second device provides the relay service for the communication between the first device and the third device, the QoS information of the first link is determined by the first device or the network device corresponding to the first device. In other words, the first device or the network device corresponding to the first device is used as a determining party of the QoS information of the first link, so that the radio bearer can be established between the first device and the second device based on the QoS information of the first link, and the data transmitted on the radio bearer can meet the QoS requirement corresponding to the QoS information of the first link.

In a possible implementation, the method further includes: The first device sends the QoS information of the second link to the second device, where the second link is a link between the second device and the third device, and the QoS information of the second link is determined by the first device. Alternatively, the method further includes: The first device receives the QoS information of the second link from the network device.

Based on the foregoing technical solution, in an implementation of determining the QoS information of the first link by the first device or the network device corresponding to the first device, the QoS information of the second link between the second device and the third device may be further determined by the first device or the network device corresponding to the first device. In addition, the first device sends the QoS information of the second link to the second device, so that a radio bearer established between the second device and the third device based on the QoS information of the second link can meet a QoS requirement corresponding to the QoS information of the second link.

In a possible implementation, that the first device obtains the QoS information of the first link includes: The first device receives the QoS information of the first link from the second device.

Based on the foregoing technical solution, when the second device provides the relay service for the communication between the first device and the third device, the first device obtains the QoS information of the first link by receiving the QoS information of the first link from the second device. In other words, the second device is used as the determining party of the QoS information of the first link, so that the radio bearer can be established between the first device and the second device based on the QoS information of the first link, and the data transmitted on the radio bearer can meet the QoS requirement corresponding to the QoS information of the first link.

In a possible implementation, the QoS information of the first link or the QoS information of the second link is determined based on at least one of the following information: link information of the first link, link information of the second link, and QoS information between the first device and the third device.

Based on the foregoing technical solution, the QoS information that is of the first link and that indicates the QoS requirement of the first link or the QoS information that is of the second link and that indicates the QoS requirement of the second link may be determined based on at least one of the foregoing information, so that flexibility of implementing the solution is improved, and the determined QoS information can match actually transmitted link information or QoS information between the devices.

In a possible implementation, the link information includes at least one of the following: a delay, reference signal received power (reference signal received power, RSRP), and a channel busy ratio (channel busy radio, CBR).

Optionally, if the CBR is determined by the first device, the CBR may specifically indicate a CBR of a resource pool of the first device. For example, the CBR of the resource pool may include a CBR of a resource pool between the first device and the second device, a CBR of one or more resource pools corresponding to the first device, a smallest value in one or more CBRs of the one or more resource pools corresponding to the first device, and a CBR of a resource pool corresponding to a communication carrier between the first device and the second device.

Optionally, if the CBR is determined by the second device, the CBR may specifically indicate a CBR of a resource pool of the second device. For example, the CBR of the resource pool may include a CBR of a resource pool between the second device and the third device, a CBR of one or more resource pools corresponding to the second device, a smallest value in one or more CBRs of the one or more resource pools corresponding to the second device, and a CBR of a resource pool corresponding to a communication carrier between the second device and the third device.

In a possible implementation, the method further includes: The first device receives the link information of the second link from the second device. The first device may further send, to the second device in advance, indication information for requesting the link information of the second link; the link information of the second link is information transmitted based on a preset periodicity; or channel quality indicated by the link information of the second link is lower than a threshold.

Based on the foregoing technical solution, when the QoS information of the first link (or the QoS information of the second link) is determined based on at least the link information of the second link, the first device may receive the link information of the second link from the second device, so that the first device or the network device corresponding to the first device obtains the link information of the second link, and determines the QoS information of the first link (or the QoS information of the second link) based on the link information of the second link. The second device may trigger, in any one of the foregoing implementations, sending of the link information of the second link to the first device.

In a possible implementation, the method further includes: The first device sends the QoS information between the first device and the third device and/or the link information of the first link to the second device.

Based on the foregoing technical solution, when the QoS information of the first link (or the QoS information of the second link) is determined based on at least the QoS information between the first device and the third device and/or the link information of the first link, the first device may send the QoS information between the first device and the third device and/or the link information of the first link to the second device, so that the second device or a network device corresponding to the second device further determines the QoS information of the first link (or the QoS information of the second link) based on the obtained information.

In a possible implementation, the method further includes: The first device sends the link information of the first link to the second device. Before the first device sends the link information of the first link to the second device, the method further includes: The first device receives, from the second device, indication information for requesting the link information of the first link; the link information of the first link is information transmitted based on a preset periodicity; or channel quality indicated by the link information of the first link is lower than a threshold.

Based on the foregoing technical solution, when the QoS information of the first link (or the QoS information of the second link) is determined based on at least the link information of the first link, the first device may send the link information of the first link to the second device, so that the second device or the network device corresponding to the second device obtains the link information of the first link, and determines the QoS information of the first link (or the QoS information of the second link) based on the link information of the first link. The first device may trigger, in any one of the foregoing implementations, sending of the link information of the first link to the second device.

In a possible implementation, the QoS information includes at least one of QoS information of a sidelink radio bearer (sidelink radio bearer, SLRB), QoS information of radio link control (radio link control, RLC), and QoS information of a QoS flow (QoS flow).

Based on the foregoing technical solution, QoS information for determining configuration information of a link may be implemented in the foregoing plurality of manners, to improve the flexibility of implementing the solution.

In a possible implementation, when the network device supports first capability information, the QoS information includes at least one of the QoS information of the SLRB, the QoS information of the RLC, and the QoS information of the QoS flow. When the network device supports second capability information or third capability information and the network device does not support the first capability information, the QoS information includes the QoS information of the QoS flow. When the network device does not support the first capability information, the second capability information, or the third capability information, the QoS information includes at least one of the QoS information of the SLRB and the QoS information of the RLC.

Based on the foregoing technical solution, when the network device corresponding to the first device (or the second device) supports different capability information, the QoS information for determining the configuration information of the link may be implemented at the foregoing different granularities, so that a radio bearer established based on the configuration information of the link can adapt to a capability of the network device.

Optionally, the first capability information indicates that the network device supports sidelink communication of a later release, that is, supports a terminal device-to-terminal device relay (UE-to-UE relay, U2U relay) communication feature. For example, the first capability information indicates that the network device supports a release 18 (release 18, R18) and/or a release later than R18.

Optionally, the second capability information indicates that the network device supports sidelink communication of an early release but does not support the sidelink communication of the later release. For example, the second capability information indicates that the network device supports a release 16 (release 16, R16) or a release 17 (release 17, R17). In addition, the network device does not support R18 and/or the release later than R18.

Optionally, the third capability information indicates that the network device does not support sidelink communication but supports another communication manner, that is, supports device-to-device (device-to-device, D2D) communication. For example, the third capability information indicates that the network device supports a release 12 (release 12, R12), a release 13 (release 13, R13), a release 14 (release 14, R14), or a release 15 (release 15, R15).

In a possible implementation, the configuration information of the first link includes sidelink relay adaptation protocol (sidelink relay adaptation protocol, SRAP) configuration information and/or RLC configuration information.

Based on the foregoing technical solution, the configuration information that is of the first link and that is sent by the first device to the second device includes a SRAP bearer and/or the RLC configuration information that can be identified by the second device used as a relay device. Therefore, in a process in which the first device and the second device communicate with each other based on the configuration information of the first link, data transmitted on the SRAP bearer corresponding to the SRAP configuration information and/or an RLC bearer corresponding to the RLC configuration information can meet the QoS requirement corresponding to the QoS information of the first link.

In a possible implementation, the method further includes: The first device sends other configuration information between the first device and the third device to the second device, where the other configuration information includes service data adaptation protocol (service data adaptation protocol, SDAP) configuration information and/or packet data convergence protocol (packet data convergence protocol, PDCP) configuration information.

Based on the foregoing technical solution, the first device may further send, to the third device by using the second device, the SDAP configuration information and/or the PDCP configuration information used for the communication between the first device and the third device, so that the first device and the third device can transmit more data based on the SDAP configuration information and/or the PDCP configuration information.

A second aspect of this application provides a communication method. The method is performed by a second device, the method is performed by some components (such as a processor, a chip, or a chip system) in the second device, or the method may be implemented by a logical module or software that can implement all or some functions of the second device. In the second aspect and the possible implementations of the second aspect, an example in which the communication method is performed by the second device is used for description. In the method, the second device receives configuration information of a first link from a first device, where the first link is a link between the first device and the second device, the configuration information of the first link is for establishing, on the first link, a radio bearer that meets QoS information, and the second device provides a relay service for communication between the first device and a third device. The second device communicates with the first device based on the configuration information of the first link.

Based on the foregoing technical solution, the second device receives the configuration information of the first link from the first device, to establish, on the first link, the radio bearer that meets the QoS information, where the second device provides the relay service for the communication between the first device and the third device. In addition, the second device can subsequently communicate with the first device based on the configuration information of the first link. In other words, when the second device provides the relay service for the communication between the first device and the third device, the second device establishes the radio bearer of the first link based on the configuration information that is of the first link and that is sent by the first device, so that data subsequently transmitted on the radio bearer can meet a QoS requirement corresponding to the QoS information of the first link, to improve user experience.

It may be understood that the second device may provide the relay service for a plurality of communication processes between the first device and the third device.

Optionally, the plurality of communication processes may include a unidirectional data communication process. For example, the communication process may be a process in which the first device sends data to the third device. In the communication process, the first device is used as a source device of the data, and the third device is used as a destination device of the data. For another example, the communication process may be a process in which the third device sends data to the first device. In the communication process, the third device is used as a source device of the data, and the first device is used as a destination device of the data.

Optionally, the plurality of communication processes may include a bidirectional data communication process. For example, the communication process may be a process in which the first device sends data to the third device and the third device sends data to the first device. In the communication process, the first device can be used as both a source device and a destination device of the data. Correspondingly, in the communication process, the third device can be used as both the source device and the destination device of the data.

In a possible implementation, the method further includes: The second device determines configuration information of a second link based on QoS information of the second link, where the second link is a link between the second device and the third device.

Based on the foregoing technical solution, the second device may further obtain the QoS information of the second link, and determine the configuration information of the second link based on the QoS information of the second link, so that a radio bearer established between the second device and the third device based on the configuration information of the second link can meet a QoS requirement corresponding to the QoS information of the second link, to further improve user experience.

In a possible implementation, the QoS information of the second link is determined by the second device. Alternatively, the method further includes: The second device receives the QoS information of the second link from a network device.

Based on the foregoing technical solution, when the second device provides the relay service for the communication between the first device and the third device, the QoS information of the second link is determined by the second device or the network device corresponding to the second device. In other words, the second device or the network device corresponding to the second device is used as a determining party of the QoS information of the second link, so that the radio bearer can be established between the second device and the second device based on the QoS information of the second link, and data transmitted on the radio bearer can meet the QoS requirement corresponding to the QoS information of the second link.

In a possible implementation, the method further includes: The second device sends the QoS information of the first link to the first device, where the QoS information of the first link is determined by the second device. Alternatively, the method further includes: The second device receives the QoS information of the first link from the network device.

Based on the foregoing technical solution, when the second device provides the relay service for the communication between the first device and the third device, the second device may further send the QoS information of the first link to the first device, so that the first device obtains the QoS information of the first link, and further determines the configuration information of the first link based on the QoS information of the first link. In other words, the second device is used as a determining party of the QoS information of the first link, so that the radio bearer can be established between the first device and the second device based on the QoS information of the first link, and the data transmitted on the radio bearer can meet the QoS requirement corresponding to the QoS information of the first link.

In a possible implementation, the method further includes: The second device receives the QoS information of the second link from the first device.

Based on the foregoing technical solution, when the second device provides the relay service for the communication between the first device and the third device, the QoS information of the second link is determined by the first device or a network device corresponding to the first device. In other words, the first device or the network device corresponding to the first device is used as the determining party of the QoS information of the second link, so that the radio bearer can be established between the second device and the third device based on the QoS information of the second link, and the data transmitted on the radio bearer can meet the QoS requirement corresponding to the QoS information of the second link.

In a possible implementation, the QoS information of the first link or the QoS information of the second link is determined based on at least one of the following information: link information of the first link, link information of the second link, and QoS information between the first device and the third device.

Based on the foregoing technical solution, the QoS information that is of the first link and that indicates the QoS requirement of the first link or the QoS information that is of the second link and that indicates the QoS requirement of the second link may be determined based on at least one of the foregoing information, so that flexibility of implementing the solution is improved, and the determined QoS information can match actually transmitted link information or QoS information between the devices.

In a possible implementation, the link information includes at least one of the following: a delay, reference signal received power RSRP, and a CBR.

Optionally, if the CBR is determined by the first device, the CBR may specifically indicate a CBR of a resource pool of the first device. For example, the CBR of the resource pool may include a CBR of a resource pool between the first device and the second device, a CBR of one or more resource pools corresponding to the first device, a smallest value in one or more CBRs of the one or more resource pools corresponding to the first device, and a CBR of a resource pool corresponding to a communication carrier between the first device and the second device.

Optionally, if the CBR is determined by the second device, the CBR may specifically indicate a CBR of a resource pool of the second device. For example, the CBR of the resource pool may include a CBR of a resource pool between the second device and the third device, a CBR of one or more resource pools corresponding to the second device, a smallest value in one or more CBRs of the one or more resource pools corresponding to the second device, and a CBR of a resource pool corresponding to a communication carrier between the second device and the third device.

In a possible implementation, the method further includes: The second device sends the link information of the second link to the first device. Before the second device sends the link information of the second link to the first device, the method further includes: The second device receives, from the first device, indication information for requesting the link information of the second link; the link information of the second link is information transmitted based on a preset periodicity; or channel quality indicated by the link information of the second link is lower than a threshold.

Based on the foregoing technical solution, when the QoS information of the first link (or the QoS information of the second link) is determined based on at least the link information of the second link, the second device may send the link information of the second link to the first device, so that the first device or the network device corresponding to the first device obtains the link information of the second link, and determines the QoS information of the first link (or the QoS information of the second link) based on the link information of the second link. The second device may trigger, in any one of the foregoing implementations, sending of the link information of the second link to the first device.

In a possible implementation, the method further includes: The second device receives the link information of the first link sent by the first device. Before the second device receives the link information of the first link sent by the first device, the method further includes: The second device sends, to the first device, indication information for requesting the link information of the first link; the link information of the first link is information transmitted based on a preset periodicity; or channel quality indicated by the link information of the first link is lower than a threshold.

Based on the foregoing technical solution, when the QoS information of the first link (or the QoS information of the second link) is determined based on at least the link information of the first link, the second device may receive the link information of the second link from the first device, so that the second device or the network device corresponding to the second device obtains the link information of the first link, and determines the QoS information of the first link (or the QoS information of the second link) based on the link information of the first link. The first device may trigger, in any one of the foregoing implementations, sending of the link information of the first link to the second device.

In a possible implementation, the method further includes: The second device sends the configuration information of the second link to the third device.

Based on the foregoing technical solution, after the second device determines the configuration information of the second link, the second device may further send the configuration information of the second link to the third device, so that the radio bearer established by the third device based on the configuration information of the second link can meet the QoS requirement corresponding to the QoS information of the second link, to further improve user experience.

In a possible implementation, the QoS information includes at least one of QoS information of a sidelink radio bearer SLRB, QoS information of radio link control RLC, and QoS information of a QoS flow.

Based on the foregoing technical solution, QoS information for determining configuration information of a link may be implemented in the foregoing plurality of manners, to improve the flexibility of implementing the solution.

In a possible implementation, when the network device supports R18, the QoS information includes at least one of the QoS information of the SLRB, the QoS information of the RLC, and the QoS information of the QoS flow. When the network device supports R16 or R17 and the network device does not support R18, the QoS information includes the QoS information of the QoS flow. When the network device does not support R16, R17, and R18, the QoS information includes at least one of the QoS information of the SLRB and the QoS information of the RLC.

Optionally, first capability information indicates that the network device supports sidelink communication of a later release, that is, supports a terminal device-to-terminal device relay (UE-to-UE relay, U2U relay) communication feature. For example, the first capability information indicates that the network device supports the release 18 (release 18, R18) and/or a release later than R18.

Optionally, second capability information indicates that the network device supports sidelink communication of an early release but does not support the sidelink communication of the later release. For example, the second capability information indicates that the network device supports the release 16 (release 16, R16) or the release 17 (release 17, R17). In addition, the network device does not support R18 and/or the release later than R18.

Optionally, third capability information indicates that the network device does not support sidelink communication but supports another communication manner, that is, supports device-to-device (device-to-device, D2D) communication. For example, the third capability information indicates that the network device supports a release 12 (release 12, R12), a release 13 (release 13, R13), a release 14 (release 14, R14), or a release 15 (release 15, R15).

In a possible implementation, the configuration information of the first link includes SRAP configuration information and/or RLC configuration information.

Based on the foregoing technical solution, the configuration information that is of the first link and that is sent by the first device to the second device includes a SRAP bearer and/or the RLC configuration information that can be identified by the second device used as a relay device. Therefore, in a process in which the first device and the second device communicate with each other based on the configuration information of the first link, data transmitted on the SRAP bearer corresponding to the SRAP configuration information and/or an RLC bearer corresponding to the RLC configuration information can meet the QoS requirement corresponding to the QoS information of the first link.

In a possible implementation, the method further includes: The second device receives other configuration information between the first device and the third device from the first device, where the other configuration information includes SDAP configuration information and/or PDCP configuration information. The second device sends the other configuration information between the first device and the third device to the third device.

Based on the foregoing technical solution, the first device may further send, to the third device by using the second device, the SDAP configuration information and/or the PDCP configuration information used for the communication between the first device and the third device, so that the first device and the third device can transmit more data based on the SDAP configuration information and/or the PDCP configuration information.

A third aspect of this application provides a communication apparatus. The apparatus can implement the method in any one of the first aspect or the possible implementations of the first aspect. The apparatus includes a corresponding unit or module configured to perform the foregoing method. The unit or module included in the apparatus may be implemented by software and/or hardware. For example, the apparatus may be a terminal device, the apparatus may be a component (for example, a processor, a chip, or a chip system) in the terminal device, or the apparatus may be a logical module or software that can implement all or some functions of the terminal device.

The apparatus includes a processing unit and a transceiver unit.

The processing unit is configured to obtain quality of service QoS information of a first link, where the first link is a link between a first device and a second device corresponding to the communication apparatus, and the second device provides a relay service for communication between the first device and a third device. The transceiver unit is configured to send configuration information of the first link to the second device, where the configuration information of the first link is for establishing, on the first link, a radio bearer that meets the QoS information.

In a possible implementation of the third aspect, the QoS information of the first link is determined by the communication apparatus. Alternatively, the transceiver unit is further configured to receive the QoS information of the first link from a network device.

In a possible implementation of the third aspect, the transceiver unit is further configured to send QoS information of a second link to the second device, where the second link is a link between the second device and the third device, and the QoS information of the second link is determined by the first device. Alternatively, the transceiver unit is further configured to receive the QoS information of the second link from the network device.

In a possible implementation of the third aspect, that the processing unit obtains the QoS information of the first link includes: The processing unit receives the QoS information of the first link from the second device by using the transceiver unit.

In a possible implementation of the third aspect, the QoS information of the first link or the QoS information of the second link is determined based on at least one of the following information: link information of the first link, link information of the second link, and QoS information between the first device and the third device.

In a possible implementation of the third aspect, the link information includes at least one of the following: a delay, reference signal received power RSRP, and a channel busy ratio CBR.

In a possible implementation of the third aspect, the QoS information includes at least one of QoS information of a sidelink radio bearer SLRB, QoS information of radio link control RLC, and QoS information of a QoS flow.

In a possible implementation of the third aspect, the configuration information of the first link includes sidelink relay adaptation protocol SRAP configuration information and/or radio link control RLC configuration information.

In the third aspect of embodiments of this application, composition modules of the communication apparatus may be further configured to: perform steps performed in the possible implementations of the first aspect, and implement corresponding technical effects. For details, refer to the first aspect. Details are not described herein again.

A fourth aspect of this application provides a communication apparatus. The apparatus can implement the method in any one of the second aspect or the possible implementations of the second aspect. The apparatus includes a corresponding unit or module configured to perform the foregoing method. The unit or module included in the apparatus may be implemented by software and/or hardware. For example, the apparatus may be a terminal device, the apparatus may be a component (for example, a processor, a chip, or a chip system) in the terminal device, or the apparatus may be a logical module or software that can implement all or some functions of the terminal device.

The apparatus includes a processing unit and a transceiver unit. The transceiver unit is configured to receive configuration information of a first link from a first device, where the first link is a link between the first device and a second device corresponding to the communication apparatus, the configuration information of the first link is for establishing, on the first link, a radio bearer that meets QoS information, and the second device provides a relay service for communication between the first device and a third device. The processing unit is configured to communicate with the first device based on the configuration information of the first link.

In a possible implementation of the fourth aspect, the processing unit is further configured to determine configuration information of a second link based on QoS information of the second link, where the second link is a link between the second device and the third device.

In a possible implementation of the fourth aspect, the QoS information of the second link is determined by the second device. Alternatively, the transceiver unit is further configured to receive the QoS information of the second link from a network device.

In a possible implementation of the fourth aspect, the transceiver unit is further configured to send the QoS information of the first link to the first device, where the QoS information of the first link is determined by the second device. Alternatively, the transceiver unit is further configured to receive the QoS information of the first link from the network device.

In a possible implementation of the fourth aspect, the transceiver unit is further configured to receive the QoS information of the second link from the first device.

In a possible implementation of the fourth aspect, the QoS information of the first link or the QoS information of the second link is determined based on at least one of the following information: link information of the first link, link information of the second link, and QoS information between the first device and the third device.

In a possible implementation of the fourth aspect, the link information includes at least one of the following: a delay, reference signal received power RSRP, and a channel busy ratio CBR.

In a possible implementation of the fourth aspect, the transceiver unit is further configured to send the configuration information of the second link to the third device.

In a possible implementation of the fourth aspect, the QoS information includes at least one of QoS information of a sidelink radio bearer SLRB, QoS information of radio link control RLC, and QoS information of a QoS flow.

In a possible implementation of the fourth aspect, the configuration information of the first link includes SRAP configuration information and/or RLC configuration information.

In the fourth aspect of embodiments of this application, composition modules of the communication apparatus may be further configured to: perform steps performed in the possible implementations of the second aspect, and implement corresponding technical effects. For details, refer to the second aspect. Details are not described herein again.

A fifth aspect of embodiments of this application provides a communication apparatus, including at least one processor, where the at least one processor is coupled to a memory.

The memory is configured to store a program or instructions.

The at least one processor is configured to execute the program or the instructions, to enable the apparatus to implement the method in any one of the first aspect or the possible implementations of the first aspect.

A sixth aspect of embodiments of this application provides a communication apparatus, including at least one processor, where the at least one processor is coupled to a memory.

The memory is configured to store a program or instructions.

The at least one processor is configured to execute the program or the instructions, to enable the apparatus to implement the method in any one of the second aspect or the possible implementations of the second aspect.

A seventh aspect of embodiments of this application provides a communication apparatus, including at least one logic circuit and an input/output interface.

The logic circuit is configured to perform the method in any one of the first aspect or the possible implementations of the first aspect, or the logic circuit is configured to perform the method in any one of the second aspect or the possible implementations of the second aspect.

An eighth aspect of embodiments of this application provides a computer-readable storage medium that stores one or more computer-executable instructions. When the computer-executable instructions are executed by a processor, the processor performs the method in any one of the first aspect or the possible implementations of the first aspect, or the processor performs the method in any one of the second aspect or the possible implementations of the second aspect.

A ninth aspect of embodiments of this application provides a computer program product (or referred to as a computer program) that stores one or more computers. When the computer program product is executed by a processor, the processor performs the method in any one of the first aspect or the possible implementations of the first aspect, or the processor performs the method in any one of the second aspect or the possible implementations of the second aspect.

A tenth aspect of embodiments of this application provides a chip system. The chip system includes at least one processor, configured to support a communication apparatus in implementing a function in any one of the first aspect or the possible implementations of the first aspect, or support the communication apparatus in implementing a function in any one of the second aspect or the possible implementations of the second aspect.

In a possible design, the chip system may further include a memory. The memory is configured to store program instructions and data that are necessary for a first communication apparatus. The chip system may include a chip, or may include a chip and another discrete component. Optionally, the chip system further includes an interface circuit, and the interface circuit provides program instructions and/or data for the at least one processor.

An eleventh aspect of embodiments of this application provides a communication system. The communication system includes the communication apparatus in the third aspect and the communication apparatus in the fourth aspect, and/or the communication system includes the communication apparatus in the fifth aspect and the communication apparatus in the sixth aspect, and/or the communication system includes the communication apparatus in the seventh aspect.

For technical effects brought by any design manner in the third aspect to the eleventh aspect, refer to technical effects brought by different design manners in the first aspect to the second aspect. Details are not described herein again.

It can be learned from the foregoing technical solutions that, when a second device provides a relay service for communication between a first device and a third device, the second device establishes a radio bearer of a first link based on configuration information that is of the first link and that is sent by the first device, so that data subsequently transmitted on the radio bearer can meet a QoS requirement corresponding to QoS information of the first link, to improve user experience.

### BRIEF DESCRIPTION OF DRAWINGS

FIG. 1a is a diagram of a communication system according to this application;
FIG. 1b is a diagram of a communication system according to this application;
FIG. 2a is a diagram of protocol stack interaction according to this application;
FIG. 2b is another diagram of protocol stack interaction according to this application;
FIG. 2c is a diagram of bearer configuration according to this application;
FIG. 3a is another diagram of protocol stack interaction according to this application;
FIG. 3b is another diagram of bearer configuration according to this application;
FIG. 4 is a diagram of a communication method according to this application;
FIG. 5 is another diagram of a communication method according to this application;
FIG. 6 is another diagram of a communication method according to this application;
FIG. 7 is a diagram of a communication apparatus according to this application;
FIG. 8 is a diagram of a communication apparatus according to this application; and
FIG. 9 is a diagram of a communication apparatus according to this application.

### DESCRIPTION OF EMBODIMENTS

The following describes technical solutions in embodiments of this application with reference to the accompanying drawings in embodiments of this application. It is clear that the described embodiments are merely some but not all embodiments of this application. All other embodiments obtained by a person of ordinary skill in the art based on embodiments of this application without creative efforts shall fall within the protection scope of this application.

First, some terms in embodiments of this application are described, to help a person skilled in the art have a better understanding.
1. A terminal device in this application includes a device that provides a voice for a user, a device that provides data connectivity for the user, and a device that provides the voice and the data connectivity for the user. For example, the terminal device may include a handheld device having a wireless connection function or a processing device connected to a wireless modem. The terminal device may also be referred to as a terminal for short. The terminal may communicate with a core network through a radio access network (radio access network, RAN), and exchange a voice or data with the RAN, or interact the voice and the data with the RAN. The terminal may include a user equipment (user equipment, UE), a wireless terminal, a mobile terminal, a device-to-device (device-to-device, D2D) communication terminal, a vehicle-to-everything (vehicle-to-everything, V2X) terminal, a road side unit (road side unit, RSU), a machine-to-machine/machine-type communication (machine-to-machine/machine-type communication, M2M/MTC) terminal, an internet of things (internet of things, IoT) terminal, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. The terminal may include a mobile phone (or referred to as a "cellular" phone), a computer having a mobile terminal, a portable, pocket-sized, handheld, or computer built-in mobile apparatus, or the like. The terminal may include a device such as a personal communications service (personal communications service, PCS) phone, a cordless telephone set, a session initiation protocol (session initiation protocol, SIP) phone, a wireless local loop (wireless local loop, WLL) station, or a personal digital assistant (personal digital assistant, PDA). The terminal further includes a limited device, for example, a device with low power consumption, a device with a limited storage capability, or a device with a limited computing capability. The terminal may include an information sensing device, for example, a barcode, radio frequency identification (radio frequency identification, RFID), a sensor, a global positioning system (global positioning system, GPS), or a laser scanner.

By way of example but not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands, smart helmets, or smart jewelry for monitoring physical signs.

If the terminals described above are located in a vehicle, for example, placed in the vehicle or mounted in the vehicle, the terminals may be all considered as vehicle-mounted terminals. For example, the vehicle-mounted terminals are also referred to as on-board units (on-board units, OBUs).

In embodiments of this application, an apparatus configured to implement a function of the terminal may be a terminal, or may be a circuit that can support the terminal in implementing the function, for example, a circuit that can be used in a chip system. The chip system may be mounted in the terminal. In embodiments of this application, the chip system may include a chip, or may include a chip and another discrete component. In the technical solutions provided in embodiments of this application, the technical solutions provided in embodiments of this application are described by using an example in which the apparatus configured to implement the function of the terminal is the terminal.

2. A network device in this application may include a radio access network (radio access network, RAN) device, for example, a base station (for example, an access point). The network device may be a device that communicates with the terminal device through an air interface in an access network, or a network device in a vehicle-to-everything (vehicle-to-everything, V2X) technology is a road side unit (road side unit, RSU). The base station may be configured to mutually convert a received over-the-air frame and an IP packet, and serve as a router between the terminal and a remaining part of the access network. The remaining part of the access network may include an IP network. The RSU may be a fixed infrastructure entity supporting V2X application, and exchanges a message with another entity supporting the V2X application. The network device may further coordinate attribute management of the air interface. For example, the network device may include an evolved NodeB (evolved NodeB, NodeB, eNB, or e-NodeB) in a long term evolution (long term evolution, LTE) system or a long term evolution-advanced (long term evolution-advanced, LTE-A) system, may include a next generation NodeB (next generation NodeB, gNB) in an evolved packet core (evolved packet core, EPC) network, a 5th generation (5th generation, 5G) communication technology, or a new radio (new radio, NR) system (also referred to as an NR system for short), or may include a central unit (central unit, CU) and a distributed unit (distributed unit, DU) in a cloud access network (cloud radio access network, Cloud RAN) system. This is not limited in embodiments of this application. The network device may further include a core network device, and the core network device includes, for example, an access and mobility management function (access and mobility management function, AMF). It should be noted that the RSU may be a network RSU, or may be a terminal device RSU. When the RSU is used as the network RSU, the RSU performs a function of the network device. When the RSU is used as the terminal device RSU, the RSU performs a function of the terminal device.

The network device can send configuration information (for example, carried in a scheduling message and/or an indication message) to the terminal device. The terminal device further performs network configuration based on the configuration information, so that network configuration of the network device and network configuration of the terminal device are aligned. Alternatively, network configuration of the network device and network configuration of the terminal device are preset, so that the network configuration of the network device and the network configuration of the terminal device are aligned. Specifically, "alignment" means that when the network device and the terminal device exchange a message, the network device and the terminal device have a consistent understanding of a carrier frequency for sending and receiving the exchanged message, determining of a type of the exchanged message, a meaning of field information carried in the exchanged message, or other configuration of the exchanged message.

In addition, in another possible case, the network device may be another apparatus that provides a wireless communication function for the terminal device. A specific technology and a specific device form that are used by the network device are not limited in embodiments of this application. For ease of description, this is not limited in embodiments of this application.

The network device may further include a core network device. The core network device includes, for example, an AMF, a user plane function (user plane function, UPF), or a session management function (session management function, SMF).

In embodiments of this application, an apparatus configured to implement the function of the network device may be a network device, or may be an apparatus, for example, a chip system, that can support the network device in implementing the function. The apparatus may be mounted in the network device. In the technical solutions provided in embodiments of this application, the technical solutions provided in embodiments of this application are described by using an example in which the apparatus configured to implement the function of the network device is the network device.

### 3. Sidelink (sidelink, SL)

Sidelink communication may be performed between terminal devices. In other words, direct communication may be performed between the terminal devices, and forwarding does not need to be performed by the network device. In this case, a link through which the terminal devices are directly connected to each other is referred to as a sidelink.

Generally, in a sidelink technology, the terminal devices may perform information direct connection through a PC5 interface between the terminal devices. In this application, the sidelink may be represented by using English "sidelink", or may be represented by using "side link". "Sidelink" and "side link" have a same meaning, and both are English expressions of the sidelink in this application. This technology can provide information exchange not only in a service coverage area of the network device, but also in a place without coverage of the network device. A terminal device that is authorized to perform special communication may use a sidelink communication manner. Certainly, the sidelink communication may be used to transmit service data of intelligent transportation, or may be used to transmit a mobile internet service. This is not limited in this application.

### 4. Resource pool (resource pool)

In a V2X, the network device may configure a resource pool for SL communication of the V2X terminal device, and one resource pool is a set of time-frequency resources. Two resource allocation modes are defined in the V2X.

In a mode 1 (mode 1), the network device schedules or configures a sidelink resource for the terminal device to perform sidelink transmission.

In a mode 2 (mode 2), the terminal device autonomously selects a resource.

Optionally, in an implementation of the mode 2 (mode 2), the terminal device senses, in a (pre)configured resource pool, resources that are not used by another terminal device, and selects an appropriate quantity of such resources for transmission of the terminal device. The V2X supports a resource sensing (sensing) process and a resource selection or reselection process in the mode 2. The sensing process may be further based on demodulating SCI information of another terminal device or another sidelink measurement result, and the demodulated SCI information reflects a resource usage on the sidelink. In the resource selection or reselection process, the resource used for the sidelink transmission may be determined based on a result of the foregoing sensing process.

5. The technical solutions in embodiments of this application may be applied to various communication systems, for example, an LTE system, a worldwide interoperability for microwave access (worldwide interoperability for microwave access, WiMAX) communication system, a 5th generation (5th generation, 5G) system such as NR, and a future communication system such as a 6G system.

### 6. Configuration and Pre-configuration

In the present invention, both the configuration and the pre-configuration are used. The configuration means that the network device or a server sends configuration information of some parameters or values of the parameters to the terminal by using a message or signaling, so that the terminal determines, based on the values or the information, a communication parameter or a resource used for transmission. The pre-configuration is similar to the configuration. The pre-configuration may be a manner in which the network device or the server sends parameter information or a value to the terminal through a carrier or a link other than the sidelink; or may be a manner in which a corresponding parameter or parameter value is defined, or a related parameter or value is written into the terminal device in advance. This is not limited in the present invention. Further, these values and parameters may be changed or updated.

7. The terms "system" and "network" may be used interchangeably in embodiments of this application. "At least one" means one or more, and "a plurality of" means two or more. "And/or" describes an association relationship between associated objects, and indicates that there may be three relationships. For example, A and/or B may indicate the following cases: Only A exists, both A and B exist, and only B exists, where A and B may be singular or plural. The character "/" generally indicates that the associated objects are in an "or" relationship. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

This application may be applied to a long term evolution (long term evolution, LTE) system, a new radio (new radio, NR) system, or another communication system. The communication system includes a network device and a terminal device. The network device is used as a configuration information sending entity, and the terminal device is used as a configuration information receiving entity. Specifically, in the communication system, an entity sends configuration information to another entity, and sends data to the another entity, or receives data sent by the another entity. The another entity receives the configuration information, and sends the data to the configuration information sending entity based on the configuration information, or receives the data sent by the configuration information sending entity. This application may be applied to a terminal device in a connected state or an active (active) state, or may be applied to a terminal device in a non-connected (inactive) state or an idle (idle) state.

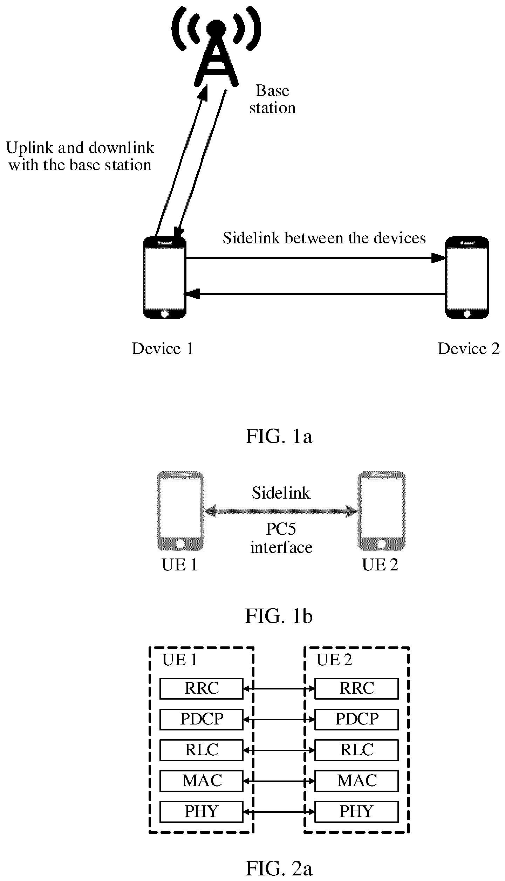

FIG. 1a is a diagram of a communication system according to an embodiment of this application. In FIG. 1a, an example in which a network device is a base station is used for description, and both a device 1 and a device 2 are terminal devices. As shown in FIG. 1a, a communication link between the device 1 and the device 2 may be referred to as a sidelink (sidelink, SL), and a communication link between the device 1 (or the device 2) and the base station may be referred to as an uplink and a downlink, including an uplink (uplink) and a downlink (downlink). It can be learned that the sidelink is a communication mechanism in which different terminal devices directly communicate with each other without using the network device.

Optionally, on the sidelink (sidelink, SL), generally, a transmit device and a receive device may be terminal devices or network devices of a same type, or may be a road side station (road side unit, RSU) and a terminal device. From a perspective of a physical entity, the RSU is a road side station or a road side unit. From a perspective of a function, the RSU may be a terminal device, or may be a network device. This is not limited in this application. In other words, the transmit device is a terminal device, and the receive device is also a terminal device; the transmit device is a road side station, and the receive device is a terminal device; or the transmit device is a terminal device, and the receive device is a road side station. In addition, the sidelink may alternatively be a link between base station devices of a same type or different types. In this case, a function of the sidelink is similar to that of a relay link, but an air interface technology used by the sidelink may be the same as or different from that used by the relay link.

For example, broadcast, unicast, and multicast are supported on the sidelink.

Broadcast communication is similar to broadcasting system information by the network device. To be specific, the terminal device sends data of a broadcast service to the outside without encryption. Any other terminal device within an effective receiving range may receive the data of the broadcast service if the terminal device is interested in the broadcast service.

Unicast communication is similar to data communication performed after an RRC connection is established between the terminal device and the network device, and a unicast connection needs to be first established between two terminal devices. After the unicast connection is established, the two terminal devices may perform data communication based on a negotiated identifier. Data may be encrypted, or may not be encrypted. In comparison with the broadcast communication, in the unicast communication, the unicast communication can be performed only between two terminal devices that have established the unicast connection.

Optionally, unicast communication performed once on the sidelink corresponds to a pair of a source layer-2 identifier (source layer-2 identifier, denoted as a source L2 ID) and a destination layer-2 identifier (destination Layer-2 Identifier, denoted as a destination L2 ID). Optionally, a subheader of a media access control protocol data unit (media access control protocol data unit, MAC PDU) on the sidelink includes the source L2 ID and the destination L2 ID, so that data is transmitted to a correct receive end.

Multicast communication is communication between all terminal devices in a communication group, and any terminal device in the group can send and receive data of a multicast service.

As shown in FIG. 1b, when a terminal device (denoted as a UE 1) directly communicates with another terminal device (denoted as a UE 2) without using a network device, a communication link between the two terminal devices may be referred to as a sidelink (sidelink). In other words, the two terminal devices communicate with each other through a proximity-based services communication 5 (proximity-based services communication 5, PC5) interface.

In an implementation example, in a process in which the UE 1 and the UE 2 communicate with each other on the sidelink, a structure of a control plane protocol stack is shown in FIG. 2a. In FIG. 2a, interaction of at least one control plane protocol layer such as a radio resource control (radio resource control, RRC) layer, a packet data convergence protocol (packet data convergence protocol, PDCP) layer, a radio link control (radio link control, RLC) layer, a media access control (media access control, MAC) layer, or a physical (physical, PHY) layer is included between the UE 1 and the UE 2.

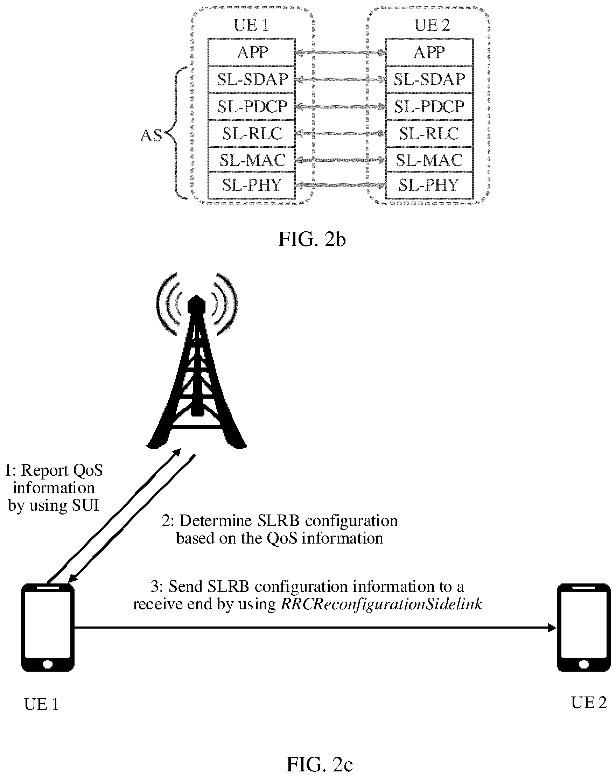

In an implementation example, in a process in which the UE 1 and the UE 2 communicate with each other on the sidelink, a structure of a user plane protocol stack is shown in FIG. 2b. In FIG. 2b, interaction of at least one user plane protocol layer such as an application (application, APP) layer, a sidelink service data adaptation protocol (sidelink service data adaptation protocol, SL-SDAP) layer, a sidelink packet data convergence protocol (sidelink packet data convergence protocol, SL-PDCP) layer, a sidelink radio link control (sidelink radio link control, SL-RLC) layer, a sidelink media access control (sidelink media access control, SL-RLC) layer, or a sidelink physical (sidelink physical, SL-PHY) layer is included between the UE 1 and the UE 2.

Optionally, in FIG. 2b, the SL-SDAP layer, the SL-PDCP layer, the SL-RLC layer, the SL-RLC layer, the SL-PHY layer, or the like may be referred to as an access stratum (access stratum, AS).

Currently, in a sidelink communication process, before a terminal device (which may be denoted as a source device) transmits a data service to another terminal device (which may be denoted as a destination device), a radio bearer may be established between the source device and the destination device based on a quality of service (quality of service, QoS) requirement corresponding to QoS information of the data service between the source device and the destination device, so that data subsequently transmitted on the established radio bearer meets the QoS requirement, to improve user experience. The following describes the implementation process with reference to the implementation example shown in FIG. 2b. In the following example, the UE 1 is the source device and the UE 2 is the destination device.

In an implementation example, the UE 1 generates QoS information based on a requirement of the APP layer. The QoS information may include a series of performance requirement parameters such as a PC5 5G QoS identifier (PC5 5th generation quality identifier, PQI), an allocation and retention priority (allocation and retention priority, ARP), and a guaranteed bit rate (guaranteed bit rate, GFBR). Then, the UE 1 maps, based on the QoS information, internet protocol (internet protocol, IP) data or non-IP data that arrives at the APP layer to a QoS flow (QoS flow). Then, the QoS flow enters the AS of the UE 1, and is transmitted in a bearer (SLRB, sidelink radio bearer) manner. As shown in the figure, the AS includes the SDAP layer, the PDCP layer, the RLC layer, the MAC layer, and the PHY layer.

Optionally, to ensure communication, the UE 1 used as a sender and the UE 2 used as a receiver need to have consistent SLRB bearer configuration information for controlling data sending or receiving. The SLRB bearer configuration information includes at least one of the following:
- SDAP configuration information: The SDAP configuration information includes whether there is an SDAP header, whether a bearer is a default SLRB, a mapping relationship between the QoS flow and the SLRB, and a communication mode (unicast, multicast, or broadcast).
- PDCP configuration information: The PDCP configuration information includes duration of a packet loss timer, a PDCP sequence number length, whether out-of-order transmission is performed, and the like.
- RLC configuration information: The RLC configuration information includes an RLC transmission mode, an RLC sequence number length, a maximum quantity of allowed retransmissions of an automatic repeat request (automatic repeat request, HARQ) in an RLC acknowledge mode (acknowledge mode, AM), and the like.
- Logical channel (sidelink logical channel, LCH) configuration information: The logical channel configuration information includes a parameter related to logical channel prioritization (logical channel prioritization, LCP), for example, a logical channel priority, a prioritized bit rate (prioritized bit rate, PBR), or bucket size duration (bucket size duration, BSD), an indication indicating whether a configured grant type 1 (configured grant type 1) is allowed to be used, whether a hybrid automatic repeat request (hybrid automatic repeat request, HARQ) feedback is enabled, a scheduling request (scheduling request, SR) resource associated with an LCH, a logical channel group (logical channel group, LCG) to which the LCH belongs, and the like.

In a possible implementation, when the UE 1 used as the sender is in different connection states, SLRB bearer configuration methods are different. Details are as follows:

### 1. SLRB configuration process in a connected state

As shown in FIG. 2c, when the UE 1 is in the connected state, the UE 1 reports a QoS information list to a network by using a sidelink user equipment information (sidelink UE information, SUI) message, as shown in step 1 in FIG. 2c. The QoS information list includes identification information PFI of each QoS flow and a corresponding QoS parameter. A base station performs SLRB bearer configuration for the UE based on QoS information reported by the UE 1, and delivers the SLRB bearer configuration to the UE 1 by using an RRC configuration message, as shown in step 2 in FIG. 2c.

After obtaining SLRB parameter configuration from the base station, the UE 1 sends a required SLRB configuration parameter to the UE 2 by using an RRC reconfiguration sidelink (RRC reconfiguration sidelink) message. After receiving the RRC message, the UE 2 may establish a bearer based on the received SLRB parameter configuration.

### 2. SLRB configuration process in an idle (Idle)/inactive (Inactive) state

When the UE 1 is in the idle/inactive state, the UE 1 performs SLRB bearer configuration based on content in a system information block 12 (system information block 12, SIB 12) delivered by the network. Similarly, the UE 1 sends SLRB parameter configuration to the UE 2 by using an RRCReconfigurationSidelink message, as shown in step 3 in FIG. 2c.

### 3. SLRB configuration process of the UE when the UE is out of coverage (out of coverage, OoC)

When the UE 1 is in an OoC state, that is, there is no cell coverage, the UE 1 obtains an SLRB-related configuration parameter from pre-configuration information, and also sends SLRB parameter configuration to the UE 2 by using an RRCReconfigurationSidelink message, as shown in step 3 in FIG. 2c.

With development of technologies, forwarding between different terminal devices may need to be performed via another relay device, to improve coverage or a capacity of the sidelink. This communication manner may be referred to as terminal device-to-terminal device relay (UE-to-UE relay, U2U relay). In other words, data can be received by the destination device only after being separately transmitted on a radio bearer between the source device and the relay device and a radio bearer between the relay device and the destination device. For example, an operator may deploy a terminal device as a relay device, and the relay device has a strong capability, for example, has more receive and transmit antennas. In this case, the relay device may assist a terminal device used as a data sender in forwarding data to a terminal device used as a data receiver, to improve coverage and increase a communication distance.

It may be understood that the terminal device used as the data sender and the terminal device used as the relay device may communicate with each other through the sidelink, and the terminal device used as the relay device and the terminal device used as the data receiver may communicate with each other through the sidelink.

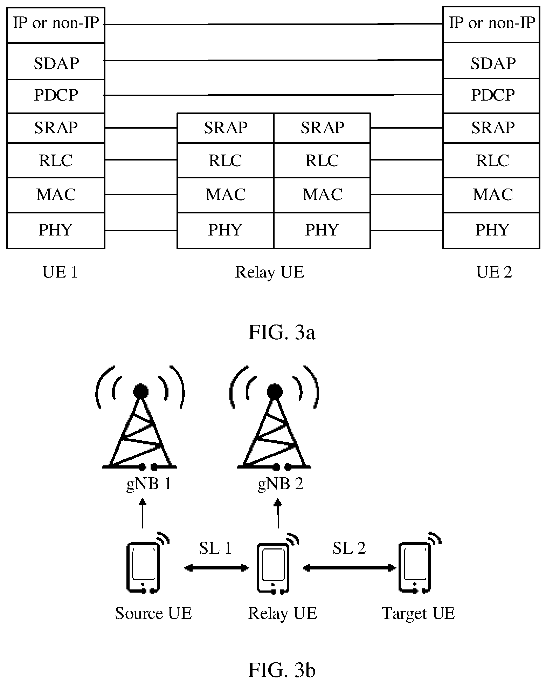

The following describes an implementation example of the U2U relay by using implementation processes shown in FIG. 3a and FIG. 3b.

For example, in a UE-to-UE relay communication scenario, there is one source terminal device (or referred to as an initiating UE, or referred to as a source UE, denoted as a source device), one or more target UEs (or referred to as target UEs, denoted as destination devices), and one or more relay UEs (denoted as relay devices). There is a requirement for unicast communication between the source device and the destination device, and sidelink coverage (where for example, a coverage signal between the source device and the destination device is poor or the source device and the destination device are out of coverage) or a capacity may be improved by using the relay device (where for example, the relay device is a device with a strong capability). The source device and the destination device may transfer data and signaling via the relay device.

The implementation process shown in FIG. 3a is used as an example. A relay device used as the relay device supports relay forwarding at protocol layers below a PDCP layer, including a SRAP layer, an RLC layer, a MAC layer, and a PHY layer in FIG. 3a. In a protocol architecture shown in FIG. 3a, the SRAP layer is added between the RLC layer and the PDCP layer. A main function of the SRAP layer is bearer multiplexing and demultiplexing, that is, supporting multiplexing of different bearers to one bearer, or splitting one bearer into different bearers.

Optionally, when a UE 1 communicates with a plurality of UEs 2 via the relay device, to distinguish between data belonging to different destination devices, a local identifier (local ID) may be allocated to each target UE, and the ID is carried in a data packet routing process, to indicate a destination device to which the data belongs.

Optionally, in data packets that are of IP data or non-IP data (denoted as IP or non-IP) and protocol layers such as an SDAP layer and the PDCP layer and that are sent by the UE 1 used as a sender, a packet header of each data packet at the SRAP layer has a local ID corresponding to the UE 2. A relay UE side obtains the local ID through parsing at an adaptation layer and forwards the local ID to a corresponding destination device.

In the foregoing UE-to-UE relay architecture, the unicast communication is used as an example. The data sent by the source device to the destination device needs to pass through two paths. A first path is a unicast connection link (denoted as a link 1) between the source device and the relay device, and a second path is a unicast connection link (denoted as a link 2) between the relay device and the destination device. However, it is considered that SL configuration of the source device, the relay device, and the destination device is separately obtained by the source device, the relay device, and the destination device from base stations of the source device, the relay device, and the destination device or based on pre-configuration of the source device, the relay device, and the destination device. As shown in FIG. 3b, an example in which the source device sends the data to the destination device via the relay device, and the source device and the relay device are in a connected state is used. The source device needs to obtain, from a network device 1 (where for example, the network device 1 is denoted as a gNB 1 in the figure), configuration of the link 1 through which the UE 1 sends the data to the relay device. In addition, configuration of the link 2 through which the relay device sends the data to the destination device needs to be obtained from a network device 2 (where for example, the network device 1 is denoted as a gNB 2 in the figure). In this case, because no centralized node can ensure end-to-end QoS, in the process of determining the configuration based on the QoS information shown in FIG. 2c, the link 1 performs bearer configuration of the link 1 based on a QoS requirement corresponding to end-to-end QoS information, and the relay device performs bearer configuration of the link 2 based on an upper-layer QoS parameter requirement of the relay device. Consequently, end-to-end QoS between the source device and the destination device cannot be ensured.

In conclusion, the QoS information indicates an end-to-end QoS requirement of service data between the source device and the destination device, and the relay device used as a forwarding device of the service data cannot sense QoS information of the service data. Consequently, a radio bearer established by the relay device may fail to meet the QoS requirement of the service data, and user experience is affected.

To resolve the foregoing problem, this application provides a communication method, a communication apparatus, and a communication system, so that when a second device provides a relay service for communication between a first device and a third device, the second device establishes a radio bearer of a first link based on configuration information that is of the first link and that is sent by the first device, and data subsequently transmitted on the radio bearer can meet a QoS requirement corresponding to QoS information of the first link, to improve user experience. The following further provides descriptions with reference to the accompanying drawings.

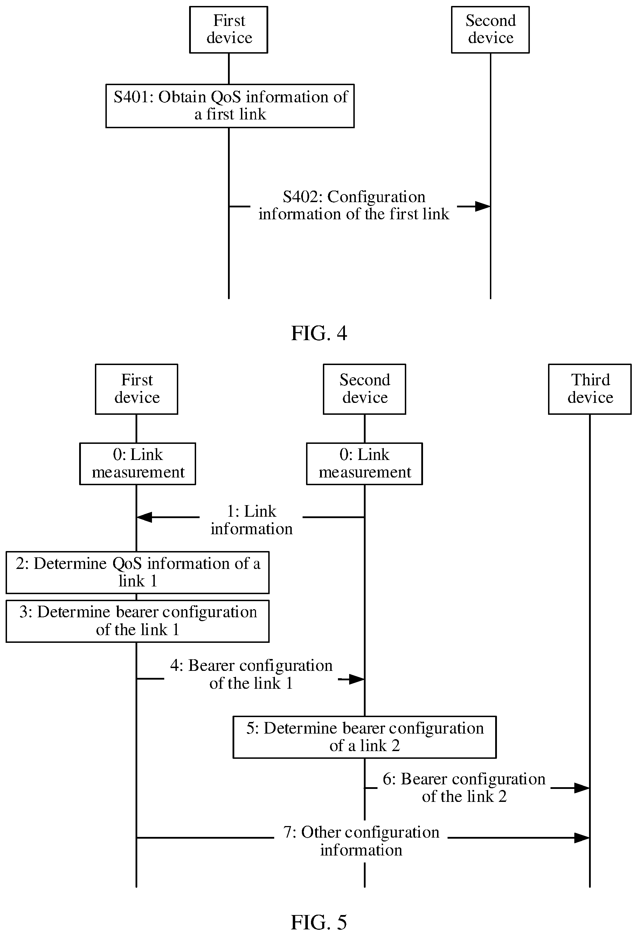

FIG. 4 is a diagram of an implementation of a communication method according to this application. The method includes the following steps.

S401: A first device obtains QoS information of a first link.

In this embodiment, the first device obtains the QoS information of the first link in step S401, where the first link is a link between the first device and a second device, and the second device provides a relay service for communication between the first device and a third device.

It may be understood that, in an implementation process in which the second device provides the relay service for the communication between the first device and the third device, the second device may provide the relay service for a plurality of communication processes between the first device and the third device.

Optionally, the plurality of communication processes may include a unidirectional data communication process. For example, the communication process may be a process in which the first device sends data to the third device. In the communication process, the first device is used as a source device of the data, and the third device is used as a destination device of the data. For another example, the communication process may be a process in which the third device sends data to the first device. In the communication process, the third device is used as a source device of the data, and the first device is used as a destination device of the data.

Optionally, the plurality of communication processes may include a bidirectional data communication process. For example, the communication process may be a process in which the first device sends data to the third device and the third device sends data to the first device. In the communication process, the first device can be used as both a source device and a destination device of the data. Correspondingly, in the communication process, the third device can be used as both a source device and a destination device of the data.

Optionally, the QoS information that is of the first link and that is obtained by the first device in step S401 may indicate a QoS requirement of unicast data (or multicast data, or broadcast data) transmitted between the first device and the second device. For example, when unicast communication is performed between the first device and the second device, the QoS information that is of the first link and that is obtained by the first device in step S401 may indicate the QoS requirement of the unicast data transmitted between the first device and the second device. For another example, when multicast communication is performed between the first device and a multicast group (where the multicast group includes at least the second device, and the multicast group may optionally include another device) to which the second device belongs, the QoS information that is of the first link and that is obtained by the first device in step S401 may indicate a QoS requirement of unicast data transmitted between the first device and the multicast group to which the second device belongs.

Correspondingly, the first link may be a unicast connection link (or a multicast connection link, or a broadcast connection link) between the first device and the second device. Similarly, a second link mentioned below may be a unicast connection link (or a multicast connection link, or a broadcast connection link) between the second device and the third device.

In step S401, the first device may obtain the QoS information of the first link in a plurality of implementations. The following separately describes the implementations.

In an implementation 1, the QoS information of the first link is determined by the first device or a network device corresponding to the first device.

In the implementation 1, in step S401, the QoS information of the first link is determined by the first device; or in step S401, the first device obtains the QoS information of the first link by receiving the QoS information of the first link from the network device. Specifically, when the second device provides the relay service for the communication between the first device and the third device, the QoS information of the first link is determined by the first device or the network device corresponding to the first device. In other words, the first device or the network device corresponding to the first device is used as a determining party of the QoS information of the first link, so that a radio bearer can be established between the first device and the second device based on the QoS information of the first link, and data transmitted on the radio bearer can meet the QoS requirement corresponding to the QoS information of the first link.

In a possible implementation, in the implementation 1, the method further includes: The first device sends QoS information of the second link to the second device, where the second link is a link between the second device and the third device, and the QoS information of the second link is determined by the first device. Alternatively, the method further includes: The first device receives QoS information of the second link from the network device. Specifically, in an implementation of determining the QoS information of the first link by the first device or the network device corresponding to the first device, the QoS information of the second link between the second device and the third device may be further determined by the first device or the network device corresponding to the first device. In addition, the first device sends the QoS information of the second link to the second device, so that a radio bearer established between the second device and the third device based on the QoS information of the second link can meet a QoS requirement corresponding to the QoS information of the second link.

Optionally, for the second device, the second device may alternatively obtain the QoS information of the second link in another manner. For example, the second device obtains the QoS information of the second link by receiving the QoS information of the second link from the network device, or obtains the QoS information of the second link in another manner. This is not limited herein.

In a possible implementation of the implementation 1, the QoS information of the first link or the QoS information of the second link is determined based on at least one of the following information: link information of the first link, link information of the second link, and QoS information between the first device and the third device. Specifically, the QoS information that is of the first link and that indicates the QoS requirement of the first link or the QoS information that is of the second link and that indicates the QoS requirement of the second link may be determined based on at least one of the foregoing information, so that flexibility of implementing the solution is improved, and the determined QoS information can match actually transmitted link information or QoS information between the devices.

Optionally, the link information includes at least one of the following: a delay, reference signal received power (reference signal received power, RSRP), and a channel busy ratio (channel busy ratio, CBR). Optionally, if the CBR is determined by the first device, the CBR may specifically indicate a CBR of a resource pool of the first device. For example, the CBR of the resource pool may include a CBR of a resource pool between the first device and the second device, a CBR of one or more resource pools corresponding to the first device, a smallest value in one or more CBRs of the one or more resource pools corresponding to the first device, and a CBR of a resource pool corresponding to a communication carrier between the first device and the second device.

Optionally, if the CBR is determined by the second device, the CBR may specifically indicate a CBR of a resource pool of the first device. For example, the CBR of the resource pool may include a CBR of a resource pool between the second device and the third device, a CBR of one or more resource pools corresponding to the second device, a smallest value in one or more CBRs of the one or more resource pools corresponding to the second device, and a CBR of a resource pool corresponding to a communication carrier between the second device and the third device.

In a possible implementation of the implementation 1, before step S401, the method further includes: The first device receives the link information of the second link from the second device. The first device may further send, to the second device in advance, indication information for requesting the link information of the second link; the link information of the second link is information transmitted based on a preset periodicity; or channel quality indicated by the link information of the second link is lower than a threshold. Specifically, when the QoS information of the first link (or the QoS information of the second link) is determined based on at least the link information of the second link, the first device may receive the link information of the second link from the second device, so that the first device or the network device corresponding to the first device obtains the link information of the second link and determines the QoS information of the first link (or the QoS information of the second link) based on the link information of the second link in step S401. The second device may trigger, in any one of the foregoing implementations, sending of the link information of the second link to the first device.

In a possible implementation of the implementation 1, the QoS information obtained by the first device in step S401 may be implemented in a plurality of manners. For example, the QoS information may include at least one of QoS information of a sidelink radio bearer (sidelink radio bearer, SLRB), QoS information of radio link control (radio link control, RLC), and QoS information of a QoS flow.

For example, when the network device corresponding to the first device supports first capability information, the QoS information includes at least one of the QoS information of the SLRB, the QoS information of the RLC, and the QoS information of the QoS flow; when the network device supports second capability information or third capability information and the network device does not support first capability information, the QoS information includes the QoS information of the QoS flow; or when the network device does not support first capability information, second capability information, or third capability information, the QoS information includes at least one of the QoS information of the SLRB and the QoS information of the RLC.

Optionally, the first capability information indicates that the network device supports sidelink communication of a later release, that is, supports a terminal device-to-terminal device relay (UE-to-UE relay, U2U relay) communication feature. For example, the first capability information indicates that the network device supports a release 18 (release 18, R18) and/or a release later than R18.

Optionally, the second capability information indicates that the network device supports sidelink communication of an early release but does not support sidelink communication of a later release. For example, the second capability information indicates that the network device supports a release 16 (release 16, R16) or a release 17 (release 17, R17). In addition, the network device does not support R18 and/or a release later than R18.

Optionally, the third capability information indicates that the network device does not support sidelink communication but supports another communication manner, that is, supports device-to-device (device-to-device, D2D) communication. For example, the third capability information indicates that the network device supports a release 12 (release 12, R12), a release 13 (release 13, R13), a release 14 (release 14, R14), or a release 15 (release 15, R15).

In an implementation 2, the QoS information of the first link is determined by the second device or a network device corresponding to the second device.

In the implementation 2, a process in which the first device obtains the QoS information of the first link in step S401 includes: The first device receives the QoS information of the first link from the second device. Specifically, when the second device provides the relay service for the communication between the first device and the third device, the first device obtains the QoS information of the first link by receiving the QoS information of the first link from the second device. In other words, the second device is used as a determining party of the QoS information of the first link, so that a radio bearer can be established between the first device and the second device based on the QoS information of the first link, and data transmitted on the radio bearer can meet the QoS requirement corresponding to the QoS information of the first link.

In a possible implementation, before step S401, the method further includes: The first device sends QoS information between the first device and the third device and/or link information of the first link to the second device. Specifically, when the QoS information of the first link (or QoS information of the second link) is determined based on at least the QoS information between the first device and the third device and/or the link information of the first link, the first device may send the QoS information between the first device and the third device and/or the link information of the first link to the second device, so that the second device or the network device corresponding to the second device further determines the QoS information of the first link (or the QoS information of the second link) based on the obtained information.

Optionally, for the second device, the second device may alternatively obtain the QoS information between the first device and the third device and/or the link information of the first link in another manner. For example, the second device receives the QoS information between the first device and the third device and/or the link information of the first link from the network device to implement the obtaining process, or the obtaining process is implemented in another manner. This is not limited herein.

It may be understood that, in the implementation 2, for a process of determining the QoS information of the first link or the QoS information of the second link, refer to an implementation process of the implementation 1, and a corresponding technical effect is implemented. Details are not described herein again.

In a possible implementation of the implementation 2, before step S401, the method further includes: The first device sends the link information of the first link to the second device. Before the first device sends the link information of the first link to the second device, the method further includes: The first device receives, from the second device, indication information for requesting the link information of the first link, where the link information of the first link is information transmitted based on a preset periodicity; or channel quality indicated by the link information of the first link is lower than a threshold. Specifically, when the QoS information of the first link (or the QoS information of the second link) is determined based on at least the link information of the first link, the first device may send the link information of the first link to the second device, so that the second device or the network device corresponding to the second device obtains the link information of the first link, and determines the QoS information of the first link (or the QoS information of the second link) based on the link information of the first link. In addition, the second device sends the QoS information of the first link to the first device, so that the first device obtains the QoS information of the first link in step S401. The first device may trigger, in any one of the foregoing implementations, sending of the link information of the first link to the second device.

S402: The first device sends configuration information of the first link to the second device.

In this embodiment, after the first device obtains the QoS information of the first link in step S401, the first device sends the configuration information of the first link to the second device in step S402. The configuration information of the first link is for establishing, on the first link, a radio bearer that meets the QoS information.

Optionally, after the first device obtains the QoS information of the first link in step S401, the first device may determine the configuration information of the first link based on the QoS information of the first link in a plurality of manners. For example, the first device locally determines the configuration information of the first link based on the QoS information of the first link. For another example, the first device sends the QoS information of the first link to the network device, and the network device determines the configuration information of the first link based on the QoS information of the first link and sends the configuration information of the first link to the first device, so that the first device obtains the configuration information of the first link. Alternatively, another implementation is used. This is not limited herein.

In a possible implementation, the configuration information that is of the first link and that is sent by the first device in step S402 (in other words, received by the second device in step S402) is for establishing, on the first link between the first device and the second device, the radio bearer that meets the QoS information of the first link. It can be learned from the implementation example shown in FIG. 3a that the second device is used as a relay device between the first device and the third device, and the second device may communicate with the first device based on one or more protocol layers such as a SRAP layer, an RLC layer, a MAC layer, and a PHY layer. Correspondingly, first configuration information sent by the first device in step S402 may include sidelink relay adaptation protocol (sidelink relay adaptation protocol, SRAP) configuration information and/or RLC configuration information. Specifically, the configuration information that is of the first link and that is sent by the first device to the second device in step S402 includes a SRAP bearer and/or the RLC configuration information that can be identified by the second device used as the relay device. Therefore, in a process in which the first device and the second device communicate with each other based on the configuration information of the first link, data transmitted on the SRAP bearer corresponding to the SRAP configuration information and/or an RLC bearer corresponding to the RLC configuration information can meet the QoS requirement corresponding to the QoS information of the first link.

Based on the technical solution shown in FIG. 4, the first device sends the configuration information of the first link to the second device in step S402, so that the first device and the second device can communicate with each other based on the configuration information of the first link. In other words, when the second device provides the relay service for the communication between the first device and the third device, the second device establishes the radio bearer of the first link based on the configuration information that is of the first link and that is sent by the first device, so that data subsequently transmitted on the radio bearer can meet the QoS requirement corresponding to the QoS information of the first link, to improve user experience.

In a possible implementation of the technical solution shown in FIG. 4, the method further includes: The first device sends other configuration information between the first device and the third device to the second device, where the other configuration information includes service data adaptation protocol (service data adaptation protocol, SDAP) configuration information and/or packet data convergence protocol (packet data convergence protocol, PDCP) configuration information. Specifically, the first device may further send, to the third device via the second device, the SDAP configuration information and/or the PDCP configuration information used for the communication between the first device and the third device, so that the first device and the third device can correctly send and receive data based on the SDAP configuration information and/or the PDCP configuration information.

In a possible implementation of the technical solution shown in FIG. 4, the method further includes: The second device sends configuration information of the second link to the third device. Specifically, after the second device determines the configuration information of the second link, the second device may further send the configuration information of the second link to the third device, so that a radio bearer established by the third device based on the configuration information of the second link can meet a QoS requirement corresponding to the QoS information of the second link, to further improve user experience.

It can be learned from the foregoing implementation process that, in step S401, the first device may obtain the QoS information of the first link by using the implementation process of the foregoing implementation 1 or implementation 2. Specifically, in the foregoing implementation 1, the QoS information of the first link and/or the QoS information of the second link may be determined by the first device or the network device corresponding to the first device. In the foregoing implementation 2, the QoS information of the first link and/or the QoS information of the second link may be determined by the second device or the network device corresponding to the second device. An example in which the first device is a source UE (Source UE), the second device is a relay UE (Relay UE), the third device is a target UE (Target UE), and the network device is a base station is used below, to describe specific implementation processes of the implementation 1 and the implementation 2 by using some implementation examples.

FIG. 5 shows an implementation example of the foregoing implementation 1. The implementation includes the following steps.

It should be noted that the implementation 1 may be applied to a UE-to-UE relay scenario. In the implementation 1, to assist a first device/a third device in performing end-to-end QoS information split to determine QoS information of a link, it is considered that a second device feeds back link information of a link status to the first device/the third device. Herein, an example in which data is sent from the first device to the third device is used. When determining QoS information of two links, the first device/a base station may consider information, such as a CBR or RSRP, that describes the link status and that is provided by the second device. On a first device side, based on an RRC state of the first device, the first device may determine the QoS information, or the first device may send the received link information to a base station of the first device, and the base station of the first device further determines the QoS information of the two links. Because a second device side has only a SRAP layer and protocol layers below the SRAP layer, the second device can perform bearer configuration only based on QoS information at an RLC channel granularity.

It should be understood that, with reference to implementation processes shown in FIG. 4 and FIG. 5, it can be learned that an implementation process of step 2 in FIG. 5 is similar to the implementation process of obtaining the QoS information of the first link in the implementation 1 in step S401. For the two implementation processes and corresponding technical effects, reference may be made to each other. In addition, an implementation process of step 4 in FIG. 5 is similar to the implementation process in which the first device sends the configuration information of the first link to the second device in step S402. For the two implementation processes and corresponding technical effects, reference may be made to each other. Correspondingly, steps other than step 2 and step 4 in FIG. 5 are optional steps.

Step 0: Perform link measurement.

In this embodiment, in step 0, the first device and the second device separately perform link measurement to obtain link information.

For example, in step 0, the link information may include link information such as a CBR, RSRP, and delay information. To be specific, in step 0, the first device and the second device respectively measure CBRs of data sending resource pools of the first device and the second device, or information that describes link quality, for example, RSRP of links and delay information between the first device and the second device and between the second device and the third device.

Step 1: The second device sends the link information to the first device.

For example, in step 1, the second device may send the link information to the first device by using a PC5-RRC message. As shown in step 0, the link information may be the CBR of the sending resource pool of the second device, the RSRP of the link between the second device and the third device, and the delay information between the second device and the third device (estimated by the second device).

Optionally, a trigger condition for sending the link information by the second device may include any one of the following:
1. The second device periodically sends the link information to the first device.
2. After the first device sends a request message, the second device sends the link information to the first device.
3. When a measurement event that a value of a CBR of a link 2 is less than or equal to a threshold 1 (threshold 1), or a value of RSRP of the link 2 is greater than or equal to a threshold 2 (threshold 2) is met, sending of the link information is triggered.

Optionally, the threshold 1 or the threshold 2 may be preconfigured for the second device, or may be configured for the second device by using a network device corresponding to the second device. This is not limited herein.

Optionally, if the link information includes a CBR measurement report, the second device may send CBRs at one or more of the following granularities in step 1, where the CBRs include:
1. a CBR of a resource pool used for communication between the second device and the third device;
2. a CBR of an entire sending resource pool of the second device;
3. a lowest CBR of a resource pool; and
4. a CBR of a resource pool at a carrier granularity.

Optionally, the link information may further include the delay information between the second device and the third device (estimated by the second device). The delay information may be a maximum estimated delay, a minimum estimated delay, or estimated delays of a relay UE for different priorities. This is not limited herein.

Step 2: The first device determines the QoS information of the link.

In this embodiment, step 2 may be that the first device or the base station of the first device performs end-to-end quality of service split (end-to-end QoS split, E2E QoS split), to determine QoS information of a unicast connection link (denoted as a link 1) between the first device and the second device, and determine QoS information of a unicast connection link (denoted as the link 2) between the second device and the third device.

It may be understood that the implementation process of step 2 in FIG. 5 is similar to the implementation process of obtaining the QoS information of the first link in the implementation 1 in step S401. For the two implementation processes and the corresponding technical effects, reference may be made to each other.

Optionally, in step 2, end-to-end quality of service (end-to-end QoS, E2E QoS) may be understood as that for QoS information such as a rate, a priority, and a packet error rate, the QoS information of the link 2 between the second device and the third device, end-to-end (E2E) QoS information between the first device and the third device, and the QoS information of the link 1 between the first device and the second device are consistent.

Optionally, in step 2, a split process of the E2E QoS split is mainly for a delay in the QoS information. With reference to some implementation examples, the following describes an example of a process in which the first device or the base station of the first device performs split based on the CBRs or the link RSRP of the first device and the second device.

For example, in step 2, that the first device or the base station of the first device performs QoS split based on the CBRs may include the following two manners.
1. The first device or the base station of the first device splits the delay based on a ratio of the CBRs of the two links. A higher CBR indicates a busier link, and a larger delay allocated to the corresponding link during split. For example, split is performed based on a ratio of the CBR of the link 1 to the CBR of the link 2, and a ratio of a delay of the link 1 to a delay of the link 2 is a ratio of a value of the CBR of the link 1 to a value of the CBR of the link 2.
2. The first device or the base station of the first device performs split based on a case in which a CBR of a link is less than a threshold. It may be understood that if the CBR is less than the threshold, the link corresponding to the CBR is idle. For example, the first device or the base station of the first device performs split based on a case in which a value of the CBR of the link 1 or a value of the CBR of the link 2 is less than (or equal to) a threshold (threshold). During split, a delay ratio corresponding to the link is X based on implementation. In this case, a delay ratio of the other link is 1-X, or may be less than 1-X.

In another implementation example, that the first device or the base station of the first device performs QoS split based on the RSRP may include the following two manners.
1. The first device or the base station of the first device splits the delay based on a ratio of RSRP of the two links. Higher RSRP indicates better link quality, and a smaller delay allocated to a corresponding link during split. For example, split is performed based on a ratio of a value of the RSRP of the link 1 to a value of the RSRP of the link 2, and a ratio of a delay of the link 1 to a delay of the link 2 is a ratio of the value of the RSRP of the link 1 to the value of the RSRP of the link 2.
2. The first device or the base station of the first device performs split based on a case in which RSRP of a link is greater than a threshold. It may be understood that if the RSRP is greater than the threshold, quality of the link corresponding to the RSRP is good. For example, the first device or the base station of the first device performs split based on a case in the RSRP of the link 1 or the RSRP of the link 2 is greater than a threshold. During split, a delay ratio corresponding to the link is X based on implementation. In this case, a delay ratio of the other link is 1-X, or may be less than 1-X.

It may be understood that, in step 2, based on different states of the first device, split may be performed by the first device or the base station of the first device.

For example, when the first device is in a connected state, the first device reports information such as the E2E QoS information, the CBR of the link 1, the CBR of the link 2, and the RSRP of the two links to the base station of the first device, so that the base station determines the QoS information of the link 1 and the link 2, and then sends the QoS information of the two links to the first device.

For another example, when the first device is in a connected state/an idle/inactive/OoC state, the first device locally determines the QoS information of the link 1 and the link 2.

Step 3: The first device determines bearer configuration of the link 1.

In this embodiment, step 3 may be that the first device or the base station of the first device determines the bearer configuration of the link 1 based on the QoS information of the link 1.

Optionally, the first device may further determine other configuration information in step 3, for example, E2E SDAP configuration and PDCP configuration between the first device and the third device.

It may be understood that an implementation process of step 3 in FIG. 5 is similar to the implementation process of determining the configuration information of the first link based on the QoS information of the first link in the embodiment shown in FIG. 4. For the two implementation processes and corresponding technical effects, reference may be made to each other.

Optionally, in step 3, if the first device is in the connected state, the base station determines the bearer configuration of the link 1 based on the QoS information of the link 1, and sends the bearer configuration to the first device.

Optionally, in step 3, if the first device is in the idle/inactive/OoC state, the first device locally determines the bearer configuration of the link 1.

Optionally, in step 3, when the first device is in the idle/inactive state, the first device performs bearer configuration of the link 1 based on content in a SIB 12 delivered by a network.

Optionally, in step 3, when the first device is in the OoC state, the first device obtains the SLRB-related configuration information from pre-configuration information.

Step 4: The first device sends the bearer configuration of the link 1 to the second device.

In this embodiment, step 4 may be that the first device sends SRAP configuration and RLC bearer configuration of the link 1, and the QoS information corresponding to the link 2 to the second device.

It may be understood that the implementation process of step 4 in FIG. 5 is similar to the implementation process in which the first device sends the configuration information of the first link to the second device in step S402. For the two implementation processes and the corresponding technical effects, reference may be made to each other.

Optionally, in step 4, the QoS information corresponding to the link 2 may include the following two cases.
1. QoS information corresponding to an SLRB includes an SLRB identifier and QoS information of a link 2 corresponding to the SLRB. It may be understood that one SLRB includes one or more QoS flows. For a plurality of pieces of QoS information with different QoS, the QoS information of the link 2 corresponding to the SLRB herein may be determined based on QoS information with a highest requirement in the plurality of QoS flows. For example, for the plurality of QoS flows, a rate is determined based on a maximum rate, a priority is determined based on a highest priority, a packet error rate is determined based on a lowest packet error rate, and a delay is determined based on a minimum delay.
2. QoS information of an RLC bearer is QoS information of a link 2 corresponding to each RLC bearer at an ingress of an RLC channel of the second device. It may be understood that one RLC channel includes one or more QoS flows. For a plurality of pieces of QoS information with different QoS, the QoS information of the link 2 corresponding to the RLC channel herein may be determined based on QoS information with a highest requirement in the plurality of QoS flows. For example, for the plurality of QoS flows, a rate is determined based on a maximum rate, a priority is determined based on a highest priority, a packet error rate is determined based on a lowest packet error rate, and a delay is determined based on a minimum delay.

Step 5: The second device determines bearer configuration of the link 2.

In this embodiment, step 5 may be that the second device or a base station of the second device determines SRAP configuration and RLC bearer configuration of the link 2 based on the QoS information of the link 2.

Optionally, in step 5, if the second device is in the connected state, the second device reports the QoS information of the link 2 to the base station of the second device, so that the base station determines the bearer configuration of the link 2, and then the base station sends the bearer configuration to the second device.

Optionally, in step 5, if the second device is in the idle/inactive/OoC state, the second device determines the bearer configuration of the link 2.

Optionally, in step 5, when the second device is in the idle/inactive state, the second device performs bearer configuration of the link 2 based on the content in the SIB 12 delivered by the network.

Optionally, in step 5, when the second device is in the OoC state, related bearer configuration of the link 2 is obtained from the pre-configuration information.

It should be understood that configuration of a SRAP layer may include mapping from the SLRB to the RLC bearer. The second device may map each data packet to the RLC bearer of the link 2 based on an SLRB identifier carried in an adaptation layer header of the data packet.

Step 6: The second device sends the bearer configuration of the link 2 to the third device.

In this embodiment, step 6 may be that the second device sends the SRAP configuration and the RLC bearer configuration of the link 2 to the third device.

Step 7: The first device sends other configuration information to the third device via the second device.

In this embodiment, step 7 may be that the first device sends the other configuration information such as E2E SDAP configuration and PDCP configuration to the third device via the second device.

It may be understood that, in the implementation process shown in FIG. 5, when the data is sent from the third device to the first device, a third device side performs the foregoing similar processing. Details are not described herein again.

It should be noted that, before the implementation process shown in FIG. 5, the UE may further consider capability information of a serving base station of the UE, to determine whether to initiate or participate in a U2U relay procedure.

For example, base stations of R18 and a later release may perform bearer configuration at an SLRB granularity or the RLC channel granularity. Therefore, the foregoing procedure can be implemented. If the base station of the first device supports a U2U relay feature, when the first device establishes an initial connection to the third device, the first device may initiate a procedure of connecting to the third device via the second device. Similarly, if the base station of the second device supports the U2U relay feature, the second device may also be used as a relay terminal to send or forward a discovery message.

For another example, when the base station of the first device supports communication of R17 and R16, but does not support a U2U relay feature of R18, the base station performs bearer configuration based on the QoS flow, and cannot perform bearer configuration at the SLRB granularity or the RLC channel granularity. Therefore, when the first device determines that the base station of the first device supports SL communication but does not support R18, the first device is restricted from being connected to the third device through the U2U relay. Similarly, when the second device determines that the base station of the second device supports the SL communication but does not support R18, the second device is restricted from participating in the U2U relay procedure as the relay UE.

For another example, if the base station of the first device does not support communication of R18, R17, or R16, but supports an earlier release, for example, supports D2D, the first device may implement bearer configuration at the SLRB granularity or the RLC channel granularity in a pre-configuration manner, and the foregoing procedure may be implemented. When the first device establishes an initial connection to the third device, the first device may initiate a procedure of connecting to the third device via the second device. Similarly, if the base station of the second device supports the U2U relay feature, the second device may also be used as a relay terminal to send or forward a discovery message.

It can be learned from the implementation process shown in FIG. 5 that, in the U2U relay scenario, to ensure an end-to-end QoS requirement, the end-to-end QoS information needs to be split into the QoS information of the link 1 and the QoS information of the link 2, and the second device provides auxiliary information for the first device/the third device/the base station of the second device, to assist a corresponding network element node in better allocating the QoS information of the link 1 and the link 2.

In addition, in the implementation process shown in FIG. 5, the first device and the second device measure a sidelink to obtain link information (for example, a CBR measurement result and an RSRP measurement result), and the second device sends the obtained link information to the first device/the third device/the base station of the second device. The first device/the third device/the base station of the second device splits the end-to-end QoS information based on link information of the two links, and splits the end-to-end QoS information into the QoS information of the two links between the first device and the second device and between the second device and the third device. The first device sends, to the second device, the QoS information of the link 2 obtained through split, and the QoS information herein may be at the SLRB granularity or the RLC channel granularity. The second device determines the bearer configuration of the link 2 based on the QoS information of the link 2. Optionally, the first device determines, based on a capability of a connected base station, whether the first device supports the U2U relay.

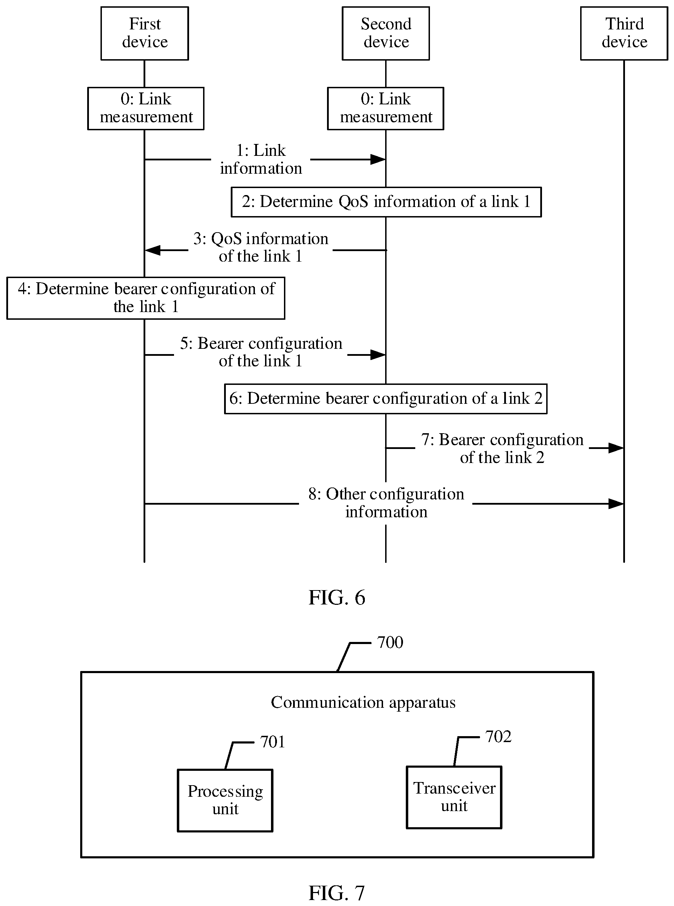

FIG. 6 shows an implementation example of the foregoing implementation 2. The implementation includes the following steps.

It should be noted that the implementation 1 may be applied to a UE-to-UE relay scenario. A main difference between the implementation 2 and the implementation example of the implementation 1 shown in FIG. 5 is that a second device splits E2E QoS herein. In the UE-to-UE relay scenario, to assist the second device in performing end-to-end QoS information split, it is considered that a source/third device feeds back link information of a link status to the second device. Herein, an example in which a data direction is a first device to the third device is used. When determining QoS information of two links, the second device/a base station may consider information, such as a CBR or RSRP, that describes the link status and that is provided by the first device. On a second device side, based on an RRC state of the second device, the second device may determine the QoS information, or the second device may send the received link information to a base station of the second device, and the base station of the second device further determines the QoS information of the two links.

It should be understood that, with reference to implementation processes shown in FIG. 4 and FIG. 6, it can be learned that an implementation process of step 3 in FIG. 6 is similar to the implementation process of obtaining the QoS information of the first link in the implementation 2 in step S401. For the two implementation processes and corresponding technical effects, reference may be made to each other. In addition, an implementation process of step 5 in FIG. 6 is similar to the implementation process in which the first device sends the configuration information of the first link to the second device in step S402. For the two implementation processes and corresponding technical effects, reference may be made to each other. Correspondingly, steps other than step 3 and step 5 in FIG. 6 are optional steps.

Step 0: Perform link measurement.

In this embodiment, in step 0, the first device and the second device separately perform link measurement to obtain link information.

For example, in step 0, the link information may include link information such as a CBR, RSRP, and delay information. To be specific, in step 0, the first device and the second device respectively measure CBRs of data sending resource pools of the first device and the second device, or information that describes link quality, for example, RSRP of links and delay information between the first device and the second device and between the second device and the third device.

Step 1: The first device sends the link information to the second device.

For example, the first device may send the link information and E2E QoS flow information to the second device by using a PC5-RRC message. The QoS flow information includes a QoS flow identifier and corresponding QoS information. The link information may be the CBR of the sending resource pool of the first device, the RSRP of the link and the delay information between the second device and the first device, or the like.

Optionally, a trigger condition for sending the link information by the first device may include any one of the following:
1. The first device periodically sends the link information to the second device.
2. After the second device sends a request message, the first device sends the link information to the second device.
3. When a measurement event that a value of a CBR of a link 1 is less than or equal to a threshold 1 (threshold 1), or a value of RSRP of the link 1 is greater than or equal to a threshold 2 (threshold 2) is met, sending of the link information is triggered.

Optionally, the threshold 1 or the threshold 2 may be preconfigured for the first device, or may be configured for the first device by using a network device corresponding to the first device. This is not limited herein.

Optionally, if the link information includes a CBR measurement report, the first device may send CBRs at one or more of the following granularities in step 1, where the CBRs include:
1. a CBR of a resource pool used for communication between the first device and the second device;
2. a CBR of an entire sending resource pool of the first device;
3. a lowest CBR of a resource pool; and
4. a CBR of a resource pool at a carrier granularity.

Step 2: The second device determines QoS information of the link 1.

In this embodiment, step 2 may be that the second device or the base station of the second device splits the E2E QoS, to determine the QoS information of the link 1. In addition, in step 2, the second device or the base station of the second device may further split the E2E QoS, to determine QoS information of the link 2.

It may be understood that delay-related QoS may be split based on a sending CBR or link RSRP of the first device. A split method is the same as that in step 2 in Embodiment 1.

It may be understood that, in step 2, based on different states of the second device, split may be performed by the second device or the base station of the second device.

For example, when the second device is in a connected state, the second device reports information such as the E2E QoS information, the CBR of the link 1, a CBR of a link 2, and the RSRP of the two links to the base station of the second device, so that the base station determines the QoS information of the link 1 and the link 2, and then sends the QoS information of the two links to the second device.

For another example, when the second device is in a connected state/an idle/inactive/OoC state, the second device locally determines the QoS information of the link 1 and the link 2.

Step 3: The second device sends the QoS information of the link 1 to the first device.

In this embodiment, step 3 may be that the second device sends, to the first device, the QoS information corresponding to the link 1 obtained through split.

It may be understood that the implementation process of step 3 in FIG. 6 is similar to the implementation process in which the first device obtains the QoS information of the first link in step S401. For the two implementation processes and the corresponding technical effects, reference may be made to each other.

Optionally, in step 3, the QoS information corresponding to the link 1 may be QoS information corresponding to a QoS flow, and includes the QoS flow identifier and the QoS information of the corresponding link 1.

Optionally, similar to the implementation of step 3, for QoS information such as a rate, a priority, and a packet error rate in the QoS information, the QoS information of the link 1 may be consistent with the E2E QoS information or the QoS information of the link 2.

Step 4: The first device determines bearer configuration of the link 1.

In this embodiment, step 4 may be that the first device or a base station of the first device determines SRAP configuration and RLC bearer configuration of the link 1 based on the QoS information of the link 1.

Optionally, the first device may further determine other configuration information in step 4, for example, E2E SDAP configuration and PDCP configuration between the first device and the third device.

It may be understood that an implementation process of step 4 in FIG. 6 is similar to the implementation process in which the first device determines the configuration information of the first link based on the QoS information of the first link in the embodiment in FIG. 4. For the two implementation processes and corresponding technical effects, reference may be made to each other.

Optionally, if the first device is in the connected state, the first device reports the QoS information of the link 1 to the base station of the first device, so that the base station determines the bearer configuration of the link 1, and then sends the configuration to the first device.

Optionally, if the first device is in the idle/inactive/OoC state, the first device determines the bearer configuration of the link 1.

Step 5: The first device sends the bearer configuration of the link 1 to the second device.

In this embodiment, step 5 may be that the first device sends the SRAP configuration and the RLC bearer configuration of the link 1 to the second device.

It may be understood that the implementation process of step 5 in FIG. 6 is similar to the implementation process in which the first device sends the configuration information of the first link to the second device in step S402. For the two implementation processes and the corresponding technical effects, reference may be made to each other.

Optionally, in step 5, the first device may further send a QoS information list and an SLRB mapping relationship to the second device. The QoS information list and the SLRB mapping relationship are used by the second device to learn corresponding QoS flows based on an SLRB identifier in a data adaptation layer header after receiving data.

Step 6: The second device determines bearer configuration of the link 2.

In this embodiment, step 6 may be that the second device or the base station of the second device 2 determines SRAP configuration and RLC bearer configuration of the link 2 based on the QoS information of the link 2.

Optionally, if the second device is in the connected state, the second device reports the QoS information of the link 2 to the base station of the second device, so that the base station determines the bearer configuration of the link 2, and then sends the configuration to the second device.

Optionally, if the second device is in the idle/inactive/OoC state, the second device determines the bearer configuration of the link 2.

Optionally, if the second device is in the idle/inactive state, the second device performs bearer configuration of the link 2 based on content in a SIB 12 delivered by a network.

Optionally, if the second device is in the OoC state, the second device obtains SLRB-related configuration information from pre-configuration information.

Step 7: The second device sends the bearer configuration of the link 2 to the third device.

In this embodiment, step 7 may be that the second device sends the SRAP configuration and the RLC bearer configuration of the link 2 to the third device.

Step 8: The first device sends other configuration information to the third device via the second device.

In this embodiment, step 8 may be that the first device sends the other configuration information such as E2E SDAP configuration and PDCP configuration to the third device via the second device.

It should be noted that, when the data is sent from the third device to the first device, a third device side performs the foregoing similar processing. Details are not described herein again.

It can be learned from the implementation process shown in FIG. 6 that, in the U2U relay scenario, to ensure end-to-end QoS, an end-to-end QoS requirement needs to be split into QoS requirements of the link 1 and the link 2, and the first device/the third device provides auxiliary information for the second device/the base station of the second device, to assist a corresponding network element node in better allocating the QoS information of the link 1 and the link 2.

In addition, in the implementation process shown in FIG. 6, the first device and the second device measure a sidelink to obtain link information (for example, a CBR measurement result and an RSRP measurement result), and the first device/the third device sends the obtained link information to the second device/the base station of the second device. The second device/the base station of the second device splits the end-to-end QoS information based on link information of the two links, and splits the end-to-end QoS information into the QoS information of the two links between the first device and the second device and between the second device and the third device. The second device UE sends, to the first device, the QoS information of the link 1 obtained through split, and the QoS information herein may be at a QoS flow granularity. The second device determines the bearer configuration based on the QoS requirement of the link 2. The first device sends the QoS information list and the SLRB mapping relationship to the second device.

The foregoing describes embodiments of this application from a perspective of the method. The following further describes a communication apparatus provided in this application.

FIG. 7 is a diagram of a communication apparatus 700 according to this application. The communication apparatus 700 includes a processing unit 701 and a transceiver unit 702. The communication apparatus 700 may implement a function of any communication apparatus (for example, the first device or the second device) in the foregoing method embodiments, and therefore can also implement beneficial effects of the foregoing method embodiments.

It should be understood that the communication apparatus 700 may be a terminal device (for example, the first device or the second device), or may be an integrated circuit, an element, or the like inside the terminal device (for example, the first device or the second device), for example, a chip.

In a possible implementation, when the apparatus 700 is configured to perform the method performed by the first device in the foregoing embodiments, the processing unit 701 and the transceiver unit 702 included in the apparatus 700 are configured to implement the following process.

The processing unit 701 is configured to obtain quality of service QoS information of a first link, where the first link is a link between the first device and the second device corresponding to the communication apparatus, and the second device provides a relay service for communication between the first device and a third device. The transceiver unit 702 is configured to send configuration information of the first link to the second device, where the configuration information of the first link is for establishing, on the first link, a radio bearer that meets the QoS information.

In a possible implementation, the QoS information of the first link is determined by the communication apparatus. Alternatively, the transceiver unit 702 is further configured to receive the QoS information of the first link from a network device.

In a possible implementation, the transceiver unit 702 is further configured to send QoS information of a second link to the second device, where the second link is a link between the second device and the third device, and the QoS information of the second link is determined by the first device. Alternatively, the transceiver unit 702 is further configured to receive the QoS information of the second link from the network device.

In a possible implementation, that the processing unit 701 obtains the QoS information of the first link includes: The processing unit 701 receives the QoS information of the first link from the second device by using the transceiver unit 702.

In a possible implementation, the QoS information of the first link or the QoS information of the second link is determined based on at least one of the following information: link information of the first link, link information of the second link, and QoS information between the first device and the third device.

In a possible implementation, the link information includes at least one of the following: a delay, reference signal received power RSRP, and a channel busy ratio CBR.

In a possible implementation, the QoS information includes at least one of QoS information of a sidelink radio bearer SLRB, QoS information of radio link control RLC, and QoS information of a QoS flow.

In a possible implementation, the configuration information of the first link includes sidelink relay adaptation protocol SRAP configuration information and/or radio link control RLC configuration information.

In a possible implementation, when the apparatus 700 is configured to perform the method performed by the first device in the foregoing embodiments, the processing unit 701 and the transceiver unit 702 included in the apparatus 700 are configured to implement the following process.

The transceiver unit 702 is configured to receive configuration information of a first link from the first device, where the first link is a link between the first device and the second device corresponding to the communication apparatus, the configuration information of the first link is for establishing, on the first link, a radio bearer that meets QoS information, and the second device provides a relay service for communication between the first device and a third device. The processing unit 701 is configured to communicate with the first device based on the configuration information of the first link.

In a possible implementation, the processing unit 701 is further configured to determine configuration information of a second link based on QoS information of the second link, where the second link is a link between the second device and the third device.

In a possible implementation, the QoS information of the second link is determined by the second device. Alternatively, the transceiver unit 702 is further configured to receive the QoS information of the second link from a network device.

In a possible implementation, the transceiver unit 702 is further configured to send the QoS information of the first link to the first device, where the QoS information of the first link is determined by the second device. Alternatively, the transceiver unit 702 is further configured to receive the QoS information of the first link from the network device.

In a possible implementation, the transceiver unit 702 is further configured to receive the QoS information of the second link from the first device.

In a possible implementation, the QoS information of the first link or the QoS information of the second link is determined based on at least one of the following information: link information of the first link, link information of the second link, and QoS information between the first device and the third device.

In a possible implementation, the link information includes at least one of the following: a delay, reference signal received power RSRP, and a channel busy ratio CBR.

In a possible implementation, the transceiver unit 702 is further configured to send the configuration information of the second link to the third device.

In a possible implementation, the QoS information includes at least one of QoS information of a sidelink radio bearer SLRB, QoS information of radio link control RLC, and QoS information of a QoS flow.

In a possible implementation, the configuration information of the first link includes SRAP configuration information and/or RLC configuration information.

It should be noted that for details of content such as an information execution process of the unit of the communication apparatus 700, refer to descriptions in the foregoing method embodiments of this application. Details are not described herein again.

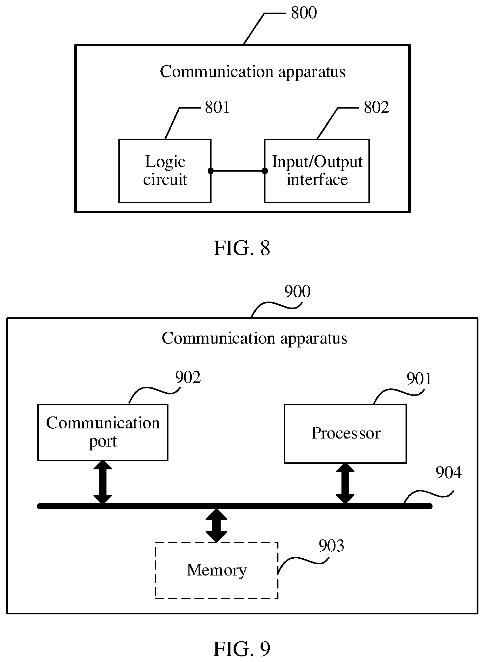

FIG. 8 is another diagram of a structure of a communication apparatus 800 according to this application. The communication apparatus 800 includes at least an input/output interface 802. The communication apparatus 800 may be a chip or an integrated circuit.

Optionally, the communication apparatus further includes a logic circuit 801.

The transceiver unit 702 shown in FIG. 7 may be a communication interface. The communication interface may be the input/output interface 802 in FIG. 8, and the input/output interface 802 may include an input interface and an output interface. Alternatively, the communication interface may be a transceiver circuit, and the transceiver circuit may include an input interface circuit and an output interface circuit.

The logic circuit 801 and the input/output interface 802 may perform other steps performed by the terminal device in any one of the foregoing embodiments and implement corresponding beneficial effects. Details are not described herein again.

In a possible implementation, the processing unit 701 shown in FIG. 7 may be the logic circuit 801 in FIG. 8.

Optionally, the logic circuit 801 may be a processing apparatus, and some or all functions of the processing apparatus may be implemented by software. Some or all functions of the processing apparatus may be implemented by software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. A memory configured to store a computer program is located outside the processing apparatus. The processor is connected to the memory through a circuit/wire, to read and execute the computer program stored in the memory. The memory and the processor may be integrated together, or may be physically independent of each other.

Optionally, the processing apparatus may be one or more chips or one or more integrated circuits. For example, the processing apparatus may be one or more field-programmable gate arrays (field-programmable gate arrays, FPGAs), application-specific integrated chips (application-specific integrated circuits, ASICs), system on chips (system on chips, SoCs), central processing units (central processing units, CPUs), network processors (network processors, NPs), digital signal processing circuits (digital signal processors, DSPs), micro controller units (micro controller units, MCUs), programmable controllers (programmable logic devices, PLDs), or another integrated chip, or any combination of the foregoing chips or processors.

In a possible implementation, the communication apparatus 800 may be configured to perform a function of the first device in the foregoing embodiments. The logic circuit 801 is configured to obtain quality of service QoS information of a first link, where the first link is a link between the first device and a second device corresponding to the communication apparatus, and the second device provides a relay service for communication between the first device and a third device. The input/output interface 802 is configured to send configuration information of the first link to the second device, where the configuration information of the first link is for establishing, on the first link, a radio bearer that meets the QoS information.

In a possible implementation, the communication apparatus 800 may be configured to perform a function of the first device in the foregoing embodiments. The input/output interface 802 is configured to receive configuration information of a first link from the first device, where the first link is a link between the first device and a second device corresponding to the communication apparatus, the configuration information of the first link is for establishing, on the first link, a radio bearer that meets QoS information, and the second device provides a relay service for communication between the first device and a third device. The logic circuit 801 is configured to communicate with the first device based on the configuration information of the first link.

It should be noted that for details of content such as an information execution process of the unit of the communication apparatus 800, refer to descriptions in the foregoing method embodiments of this application. Details are not described herein again.

FIG. 9 shows a communication apparatus 900 in the foregoing embodiments according to an embodiment of this application.

For example, the communication apparatus 900 may be specifically the communication apparatus used as the terminal device in the foregoing embodiments.

In a possible diagram of a logical structure of the communication apparatus 900, the communication apparatus 900 may include but is not limited to at least one processor 901 and a communication port 902.

Further, optionally, the apparatus may include at least one of a memory 903 and a bus 904. In this embodiment of this application, the at least one processor 901 is configured to perform control processing on an action of the communication apparatus 900.

In addition, the processor 901 may be a central processing unit, a general-purpose processor, a digital signal processor, an application-specific integrated circuit, a field programmable gate array or another programmable logic device, a transistor logic device, a hardware component, or any combination thereof. The processor 901 may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. A person skilled in the art may clearly understand that, for a purpose of convenient and brief description, for a detailed working process of the foregoing system, apparatus, and unit, refer to a corresponding process in the foregoing method embodiments. Details are not described herein again.

It should be noted that the communication apparatus 900 shown in FIG. 9 may be specifically configured to implement the steps implemented by the communication apparatus (for example, the first device or the second device) in the foregoing method embodiments, and implement technical effects corresponding to the communication apparatus. For a specific implementation of the communication apparatus shown in FIG. 9, refer to the descriptions in the foregoing method embodiments. Details are not described herein again.

An embodiment of this application further provides a computer-readable storage medium that stores one or more computer-executable instructions. When the computer-executable instructions are executed by a processor, the processor performs the method in a possible implementation of the communication apparatus (for example, the first device or a second device) in the foregoing embodiments.

An embodiment of this application further provides a computer program product (or referred to as a computer program) that stores one or more computers. When the computer program product is executed by a processor, the processor performs the method in a possible implementation of the communication apparatus (for example, the first device or the second device).

An embodiment of this application further provides a chip system. The chip system includes at least one processor, configured to support a communication apparatus in implementing a function in a possible implementation of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the first device or the second device in the foregoing method embodiments.

An embodiment of this application further provides a communication system. The network system architecture includes the communication apparatus (for example, the first device and/or the second device) in any one of the foregoing embodiments.

In the several embodiments provided in this application, it should be understood that the disclosed system, apparatus, and method may be implemented in other manners. For example, the described apparatus embodiments are merely examples. For example, division into the units is merely logical function division and there may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, may be located at one location, or may be distributed on a plurality of network units. Some or all of the units may be selected based on an actual requirement to achieve objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit. When the integrated unit is implemented in the form of a software functional unit and sold or used as an independent product, the integrated unit may be stored in a computer-readable storage medium. Based on such an understanding, the technical solutions of this application essentially, or a part contributing to conventional technologies, or all or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A communication method, comprising:
obtaining quality of service QoS information of a first link, wherein the first link is a link between a first device and a second device, and the second device provides a relay service for communication between the first device and a third device; and
sending configuration information of the first link to the second device based on the QoS information of the first link, wherein the configuration information of the first link is for establishing, on the first link, a radio bearer that meets the QoS information.

2. The method according to claim 1, wherein
the QoS information of the first link is determined by the first device;
or
the method further comprises: receiving, by the first device, the QoS information of the first link from a network device.

3. The method according to claim 2, wherein the method further comprises:
sending QoS information of a second link to the second device, wherein the second link is a link between the second device and the third device, and
the QoS information of the second link is determined by the first device;
or
the method further comprises: receiving QoS information of a second link from the network device.

4. The method according to any one of claims 1 to 3, wherein the obtaining QoS information of a first link comprises:
receiving the QoS information of the first link from the second device.

5. The method according to claim 3 or 4, wherein the QoS information of the first link or the QoS information of the second link is determined based on at least one of the following information:
link information of the first link, link information of the second link, and QoS information between the first device and the third device.

6. The method according to claim 5, wherein the link information comprises at least one of the following:
a delay, reference signal received power RSRP, and a channel busy ratio CBR.

7. The method according to any one of claims 1 to 6, wherein
the QoS information comprises at least one of QoS information of a sidelink radio bearer SLRB, QoS information of radio link control RLC, and QoS information of a QoS flow.

8. The method according to any one of claims 1 to 7, wherein the configuration information of the first link comprises sidelink relay adaptation protocol SRAP configuration information and/or radio link control RLC configuration information.

9. A communication method, comprising:
receiving configuration information of a first link from a first device, wherein the first link is a link between the first device and a second device, the configuration information of the first link is for establishing, on the first link, a radio bearer that meets QoS information, and the second device provides a relay service for communication between the first device and a third device; and
communicating with the first device based on the configuration information of the first link.

10. The method according to claim 9, wherein the method further comprises:
determining configuration information of a second link based on QoS information of the second link, wherein the second link is a link between the second device and the third device.

11. The method according to claim 10, wherein
the QoS information of the second link is determined by the second device;
or
the method further comprises: receiving the QoS information of the second link from a network device.

12. The method according to claim 11, wherein the method further comprises: sending the QoS information of the first link to the first device, wherein
the QoS information of the first link is determined by the second device;
or
the method further comprises: receiving the QoS information of the first link from the network device.

13. The method according to any one of claims 10 to 12, wherein the method further comprises:
receiving the QoS information of the second link from the first device.

14. The method according to any one of claims 10 to 13, wherein the QoS information of the first link or the QoS information of the second link is determined based on at least one of the following information:
link information of the first link, link information of the second link, and QoS information between the first device and the third device.

15. The method according to claim 14, wherein the link information comprises at least one of the following:
a delay, reference signal received power RSRP, and a CBR.

16. The method according to any one of claims 10 to 15, wherein the method further comprises:
sending the configuration information of the second link to the third device.

17. The method according to any one of claims 10 to 16, wherein
the QoS information comprises at least one of QoS information of a sidelink radio bearer SLRB, QoS information of radio link control RLC, and QoS information of a QoS flow.

18. The method according to any one of claims 9 to 17, wherein the configuration information of the first link comprises SRAP configuration information and/or RLC configuration information.

19. A communication apparatus, comprising a processing unit and a transceiver unit, wherein
the processing unit and the transceiver unit are configured to perform the method according to any one of claims 1 to 8.

20. A communication apparatus, comprising a transceiver unit and a processing unit, wherein
the processing unit and the transceiver unit are configured to perform the method according to any one of claims 9 to 18.

21. A communication apparatus, comprising at least one processor, wherein the at least one processor is coupled to a memory;
the memory is configured to store a program or instructions; and
the at least one processor is configured to execute the program or the instructions, to enable the apparatus to implement the method according to any one of claims 1 to 8, or enable the apparatus to implement the method according to any one of claims 9 to 18.

22. A computer-readable storage medium, wherein the medium stores instructions, and when the instructions are executed by a computer, the method according to any one of claims 1 to 18 is implemented.

23. A computer program product, comprising instructions, wherein when the instructions are run on a computer, the computer is enabled to perform the method according to any one of claims 1 to 18.

24. A chip, wherein the chip comprises a processor and a communication interface, wherein
the communication interface is coupled to the processor, and the processor is configured to run a computer program or instructions, to implement the method according to any one of claims 1 to 18.

25. A communication system, wherein the communication system comprises a first device and a second device, wherein
the first device is configured to perform the method according to any one of claims 1 to 8, and the second device is configured to perform the method according to any one of claims 9 to 18.

26. The communication system according to claim 25, wherein the communication system further comprises a third device.
